# EUROPEAN PATENT APPLICATION

(11) **EP 4 703 536 A1**
(43) Date of publication of application: **04.03.2026**
(21) Application number: 24795527.1
(22) Date of filing: 05.02.2024
(51) Int. Cl.: E04H 4/16

(54) **LOCOMOTION APPARATUS USED IN LIQUID, AND CLEANING DEVICE**

(30) Priority: 27.04.2023 WO PCT/CN2023/091116
(71) Applicant: Xingmai Innovation Technology (Suzhou) Co., Ltd., Suzhou, Jiangsu 215124 (CN)
(72) Inventor: ZHANG, Shilei, Suzhou, Jiangsu 215124 (CN)
(74) Representative: Huang, Liwei
(86) International application number: PCT/CN2024/076033
(87) International publication number: WO 2024/222138

(57) **Abstract**

The present disclosure provides a moving apparatus used in liquid and a cleaning device (10). The moving apparatus includes an regulation assembly configured to regulate a force in a first direction applied to the moving apparatus or a force in a second direction applied to the moving apparatus. The moving apparatus is switched between a first motion state and a third motion state under an action of the regulation assembly. The cleaning device is capable of performing underwater cleaning in the first motion state and performing water surface cleaning in the third motion state. The moving apparatus is switched from the first motion state to the third motion state under an action of the force in the first direction, and the moving apparatus is switched from the third motion state to the first motion state under an action of the force in the second direction The cleaning device (10) can be switched between the first motion state and the third motion state. Therefore, the cleaning device (10) can be regulated to perform at least two operating conditions: underwater cleaning and water surface cleaning, thereby meeting various use requirements.

## Description

### CROSS REFERENCE TO RELATED APPLICATIONS

This application claims priority to International Patent Application No. PCT/CN2023/091116, filed with the World Intellectual Property Organization on April 27, 2023 and entitled "MOVING APPARATUS USED IN LIQUID AND SWIMMING POOL CLEANING ROBOT", which is incorporated herein by reference in its entirety.

### TECHNICAL FIELD

The present disclosure relates to the technical field of operating devices for liquid, and in particular to, a moving apparatus used in liquid and a cleaning device.

### BACKGROUND

Swimming pool cleaning and maintenance are essential to keep water clean and the swimming pool hygienic. Swimming pool cleaning robots in the market can be classified into three categories. For the first category, the cleaning robot can clean the bottom of the swimming pool only. For the second category, the cleaning robot can clean both the bottom and vertical wall surfaces of the swimming pool, but the cleaning robot should operate under a water surface. For the third category, the cleaning robot constantly floats on the water surface and cleans only the water surface. The three categories of swimming pool cleaning robots have their own characteristics, but these swimming pool cleaning robots cannot effectively regulate positions in a liquid environment and their depth in the liquid environment based on actual needs. As a result, the bottom of the swimming pool, the wall surfaces of the swimming pool, and the water surface cannot be comprehensively cleaned. Consequently, application ranges and operating efficiencies of these cleaning robots are limited.

Therefore, there is a need for a moving apparatus used in liquid and a swimming pool cleaning robot which can be flexibly switched between a position on a water surface and a position under the water surface, to improve the operating efficiency in cleaning water and the application range and reduce cleaning costs.

### SUMMARY

The present disclosure provides a moving apparatus used in liquid. The moving apparatus includes an regulation assembly, configured to regulate an force in a first direction applied to the moving apparatus or an force in a second direction applied to the moving apparatus, wherein the moving apparatus is switched between a first motion state and a third motion state under an action of the regulation assembly, wherein the moving apparatus is capable of performing underwater cleaning in the first motion state and performing water surface cleaning in the third motion state; the force under the first direction helps the moving apparatus to be switched from the first motion state to the third motion state; the force under the second direction helps the moving apparatus to be switched from the third motion state to the first motion state.

The moving apparatus includes a mode switching member configured to allow the moving apparatus to be switched between a position on a water surface and a position under the water surface. When the moving apparatus is located under the water surface, the moving apparatus is completely immersed under the water surface, and when the moving apparatus is located on the water surface, at least a part of the moving apparatus is located on the water surface.

The mode switching member is further configured to regulate a force applied to the moving apparatus in a vertical direction.

The force applied to the moving apparatus in the vertical direction includes a buoyancy force applied to the moving apparatus in the vertical direction. The mode switching member includes a buoyancy regulation assembly configured to regulate the buoyancy force applied to the moving apparatus in the vertical direction.

The moving apparatus further includes: a first sensor configured to sense a position of the moving apparatus; and a processor configured to: when the moving apparatus needs to be switched from the position under the water surface to the position on the water surface, obtain the position of the moving apparatus, and when the position of the moving apparatus meets a preset condition, control a buoyancy regulation part to increase a volume of gas in a buoyancy cavity.

The moving apparatus further includes: a second sensor configured to detect whether an air inlet of a buoyancy cavity is exposed to air; and the processor configured to: when the moving apparatus needs to be switched from the position under the water surface to the position on the water surface, obtain a detection result of whether the air inlet is exposed to the air, and if the detection result indicates that the air inlet is exposed to the air, control a buoyancy regulation part to increase a volume of gas in the buoyancy cavity.

The moving apparatus further includes a processor configured to: when the moving apparatus needs to be switched from the position on the water surface to the position under the water surface, a buoyancy regulation part to reduce a volume of gas in a buoyancy cavity.

The force applied to the moving apparatus in the vertical direction includes a first driving force applied to the moving apparatus in the vertical direction. The mode switching member includes a power regulation assembly configured to regulate the first driving force applied to the moving apparatus in the vertical direction.

The power regulation assembly includes a first propeller configured to push liquid to move in a first preset direction. When the liquid moves in the first preset direction, the first driving force is applied to the moving apparatus in the vertical direction. The first driving force is positively correlated with a speed at which the liquid moves in the first preset direction.

At least one second propeller is disposed on each of a left side and a right side of the moving apparatus in a horizontal direction.

The present disclosure provides a cleaning device, including a cleaning device body. The cleaning device body includes: a liquid inlet portion, including at least a first water inlet; a liquid outlet portion, including at least a first water outlet; a filtering mechanism, including at least a first inlet and an outlet, where the first inlet is in fluid communication with the first water inlet, and the outlet is in fluid communication with the first water outlet; a drive mechanism configured to generate a suction force to form a first water flow path with the liquid inlet portion, the filtering mechanism, and the liquid outlet portion; and a moving apparatus configured to allow the cleaning device to be switched between a first motion state and a third motion state. The cleaning device is capable of performing underwater cleaning in the first motion state and performing water surface cleaning in the third motion state.

A filtering box opening includes a filtering box opening for water surface cleaning disposed on a side of the underwater cleaning device. The filtering box opening for water surface cleaning is aligned with a position at which the underwater cleaning device floats on a water surface, and is configured to allow garbage or debris on the water surface of a swimming pool to enter a filtering box.

The filtering box includes a filtering box roller brush assembly disposed in the filtering box opening for water surface cleaning and configured to draw garbage or debris on the water surface of the swimming pool into the filtering box during water surface cleaning.

The filtering box opening includes a filtering box opening for underwater cleaning disposed under the position at which the underwater cleaning device floats on the water surface and configured to allow garbage or debris in water in the swimming pool to enter the filtering box.

The filtering box further includes a filtering box opening cover plate for water surface cleaning disposed on the filtering box opening for water surface cleaning, where the filtering box opening cover plate for water surface cleaning is a movable part and configured to regulate an open state and a closed state of the filtering box opening for water surface cleaning; and a filtering box opening cover plate for underwater cleaning disposed on the filtering box opening for underwater cleaning, where the filtering box opening cover plate for underwater cleaning is a movable part and configured to regulate an open state and a closed state of the filtering box opening for underwater cleaning. A garbage guiding member is further included. The garbage guiding member is configured to drive the garbage on the water surface of the swimming pool to enter the filtering box opening for water surface cleaning and is disposed outside the filtering box opening for water surface cleaning, and the interior of the garbage guiding member is hollow. A first port of the garbage guiding member is away from the filtering box opening for water surface cleaning, and a second port of the garbage guiding member is connected to the filtering box opening for water surface cleaning. A size of the first port is greater than a size of the filtering box opening for water surface cleaning. A size of the second port is not less than the size of the filtering box opening for water surface cleaning.

The underwater cleaning device further includes a roller brush for underwater cleaning disposed on a bottom or a side of the underwater cleaning device and configured to clean a target bottom wall and a target side wall of the swimming pool.

The present disclosure further provides a liquid cleaning control method applied to the above cleaning device and performed by a control member. The method includes: obtaining a target task of cleaning a target swimming pool, where the target task includes water surface cleaning and/or underwater cleaning; determining an regulation parameter of a moving apparatus based on the target task and a current position of the underwater cleaning device; and controlling, based on the regulation parameter, the moving apparatus to drive the underwater cleaning device to move and perform cleaning to complete the target task.

The present disclosure further provides a computer-readable storage medium. The storage medium stores computer instructions. When the computer instructions are executed by a processor, the liquid cleaning control method is implemented.

### BRIEF DESCRIPTION OF THE DRAWINGS

To illustrate the technical solutions in embodiments of the present disclosure more clearly, the following briefly introduces the accompanying drawings needed for describing the embodiments. It is clear that the accompanying drawings in the following descriptions are merely some embodiments of the present disclosure, and a person of ordinary skill in the art may further obtain other accompanying drawings from these accompanying drawings without creative efforts.
FIG. 1 is a first schematic structural diagram of a moving apparatus according to a first embodiment of the present disclosure;
FIG. 2 is a schematic diagram of a assembly of a moving apparatus according to a first embodiment of the present disclosure;
FIG. 3 is a schematic diagram of a partial structure of a moving apparatus according to a first embodiment of the present disclosure;
FIG. 4 is a schematic diagram showing that a moving apparatus moves on a side wall of a target region according to a first embodiment of the present disclosure;
FIG. 5 is a schematic diagram showing that a moving apparatus floats on a water surface according to a first embodiment of the present disclosure;
FIG. 6 is a second schematic structural view of a moving apparatus according to a first embodiment of the present disclosure;
FIG. 7 is a schematic diagram showing that a moving apparatus moves on a bottom wall of a target region according to a second embodiment of the present disclosure;
FIG. 8 is a schematic diagram showing that a moving apparatus moves on a bottom wall and a side wall of a target region according to a second embodiment of the present disclosure;
FIG. 9 is a schematic diagram showing that a moving apparatus moves on a side wall of a target region according to a second embodiment of the present disclosure;
FIG. 10 is a first schematic cross-sectional diagram of a cleaning device according to a third embodiment of the present disclosure;
FIG. 11 is a second schematic cross-sectional diagram of a cleaning device according to a third embodiment of the present disclosure;
FIG. 12 is a schematic structural view of a cleaning device according to a third embodiment of the present disclosure;
FIG. 13 is a third schematic cross-sectional diagram of a cleaning device according to a third embodiment of the present disclosure;
FIG. 14 is a first schematic structural diagram of a cleaning device according to a fourth embodiment of the present disclosure;

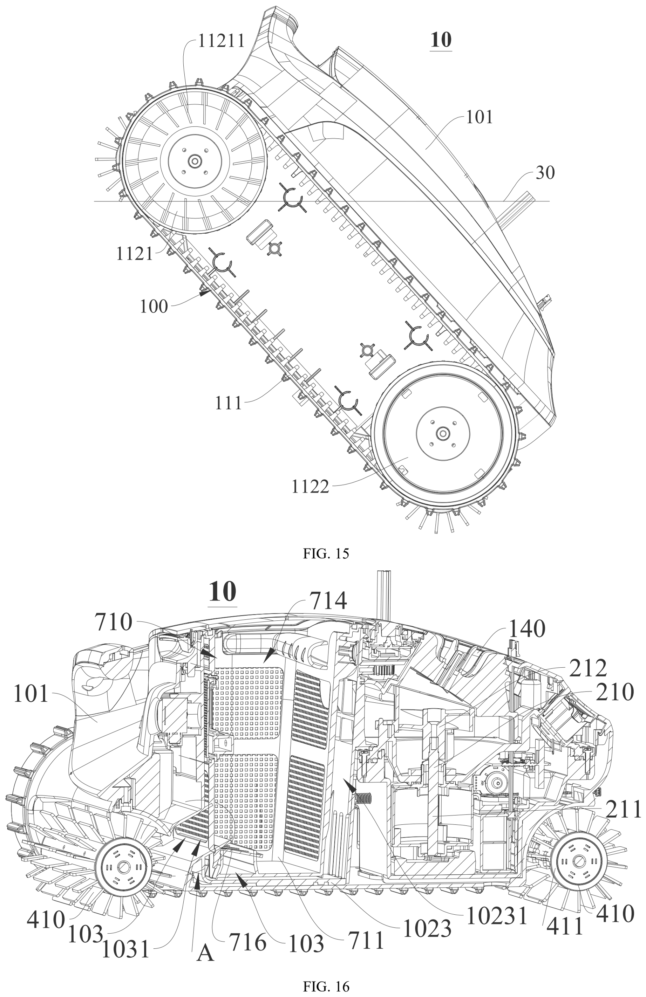

FIG. 15 is a second schematic structural diagram of a cleaning device according to a fourth embodiment of the present disclosure.
FIG. 16 is a first schematic cross-sectional diagram of a cleaning device according to a fifth embodiment of the present disclosure;

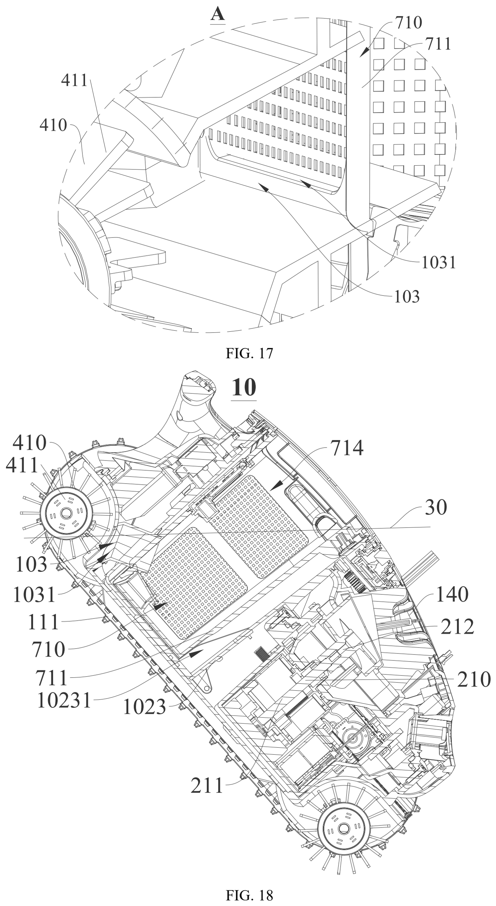

FIG. 17 is a schematic enlarged diagram of a portion A shown in FIG. 16;
FIG. 18 is a second cross-sectional diagram showing that at least a part of a cleaning device is located on a water surface according to a fifth embodiment of the present disclosure; and
FIG. 19 is a schematic flow chart of a liquid cleaning control method according to the present disclosure.

Reference numerals: 10: cleaning device; 101: cleaning device body; 103: liquid inlet portion; 1031: first water inlet; 1032: second water inlet; 104: liquid outlet portion; 106: garbage guiding member; 1061: first port; 1062: second port; 100: movement propulsion system; 111: track; 1121: first wheel; 11211: drive paddle; 1122: second wheel; 131: first propeller; 1311: first impeller; 1312: first propeller motor; 1313: first propeller opening; 132: second propeller; 210: main water pump; 213: main pump water inlet; 214: main pump water outlet; 410: roller brush for underwater cleaning; 510: mode switching member; 511: buoyancy regulation assembly; 5111: buoyancy cavity; 5112: buoyancy cavity pump; 5113: air inlet; 5114: connection duct; 710: filtering assembly; 711: filtering box; 716: filtering box water inlet portion; 7161: filtering box opening for water surface cleaning; 7162: filtering box opening for underwater cleaning; 717: filtering box roller brush assembly; 718: filtering box opening cover plate for water surface cleaning; 719: filtering box opening cover plate for underwater cleaning; 30: water surface; 40: target region; 401: target bottom wall; 402: target side wall.

### DETAILED DESCRIPTION

The following clearly and completely describes the technical solutions in embodiments of the present disclosure with reference to the accompanying drawings in embodiments of the present disclosure. Apparently, the described embodiments are merely some but not all of embodiments of the present disclosure. All other embodiments obtained by a person of ordinary skill in the art based on embodiments of the present disclosure without creative efforts shall fall within the protection scope of the present disclosure.

Cleaning devices on the market cannot effectively regulate positions in a liquid environment and their depth in the liquid environment based on actual needs. As a result, the bottom of a swimming pool, wall surfaces of the swimming pool, and a water surface cannot be comprehensively cleaned. Consequently, application ranges and operating efficiencies of these cleaning devices are limited. The present disclosure provides a moving apparatus used in liquid. The moving apparatus can be flexibly switched between a position on a water surface and a position under the water surface, so that a cleaning device including the moving apparatus can comprehensively clean a swimming pool. This improves operating efficiency of cleaning liquid in the swimming pool and an application range and reduces cleaning costs of the swimming pool.

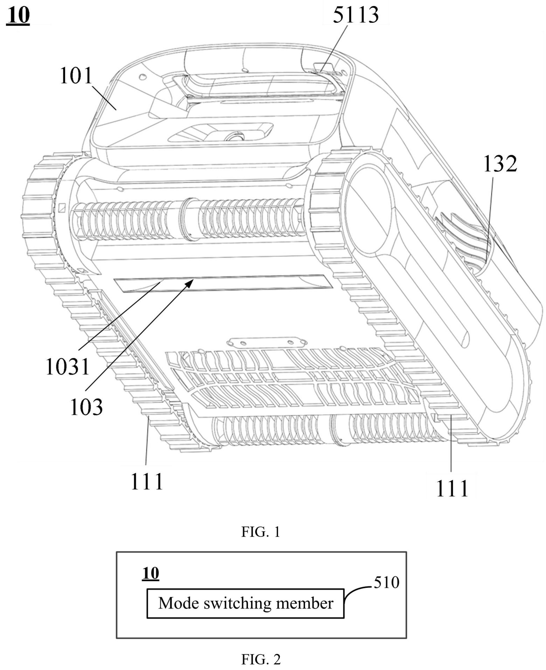

Refer to FIG. 1 and FIG. 2. FIG. 1 is a first schematic structural diagram of a moving apparatus according to a first embodiment of the present disclosure. FIG. 2 is a schematic diagram of a assembly of a moving apparatus according to a first embodiment of the present disclosure. The cleaning device 10 may be a pool cleaning robot, a swimming pool cleaning robot, an underwater cleaning device, or the like. This is not limited herein. The moving apparatus is configured to move in a target region 40 that contains liquid and may be switched between a position on a water surface 30 and a position under the water surface 30. The target region 40 may be a region in which the moving apparatus moves and the liquid is contained. The target region 40 may be a swimming pool or a pool. For example, the moving apparatus may move in water in the swimming pool and be switched between a position on a water surface of the swimming pool and a position under the water surface of the swimming pool. In some other embodiments, the target region 40 may be other regions. For example, the target region 40 may alternatively be an oil well, a sewer, or the like. The target region 40 may include a target bottom wall 401 and a target side wall 402. In some embodiments, the moving apparatus may move on the target bottom wall 401 and the target side wall 402 of the target region 40. For example, the moving apparatus may move on the target bottom wall 401 and the target side wall 402 of the swimming pool. For details about movement of the moving apparatus on the target bottom wall 401 and the target side wall 402 of the target region 40, refer to the following description.

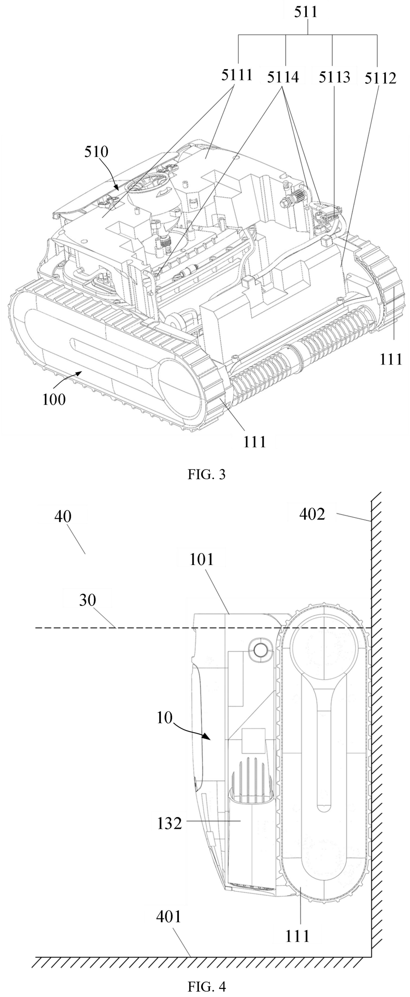

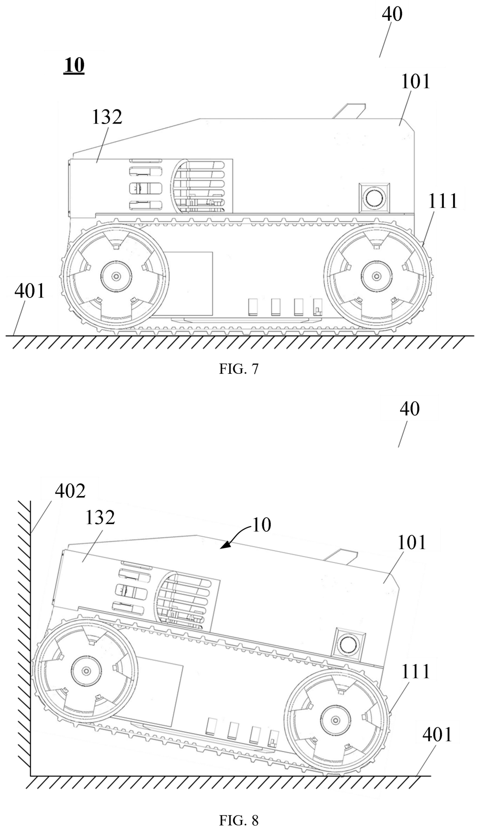

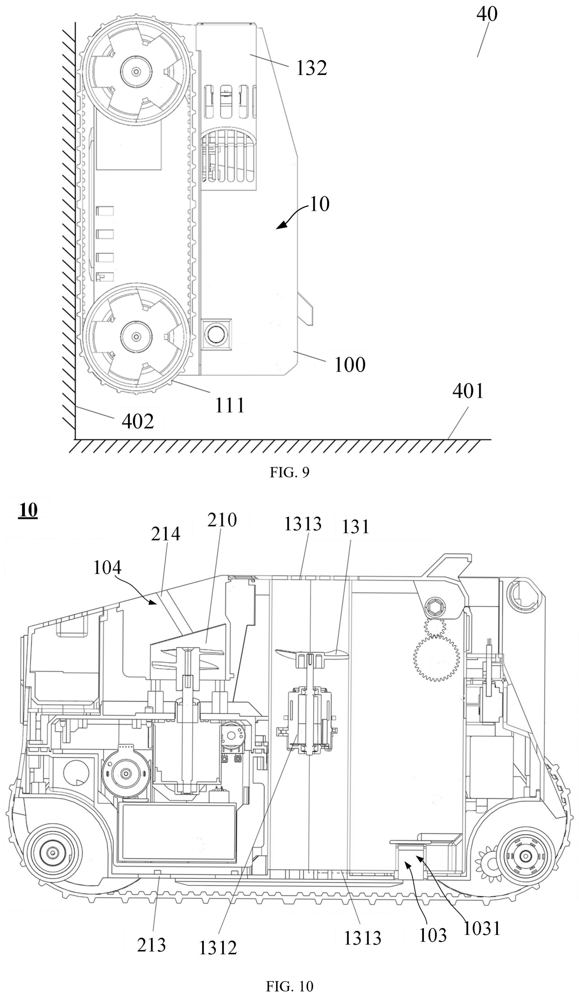

With reference to FIG. 4, FIG. 5, FIG. 7, FIG. 8, and FIG. 9, a first motion state is defined as a state in which the moving apparatus moves on the target bottom wall 401, or an angle between the target bottom wall 401 and an overall direction of the moving apparatus is less than 90° and the moving apparatus is away from the water surface 30. As shown in FIG. 7, that the moving apparatus is away from the water surface 30 may be understood as that the moving apparatus cleans the bottom of the pool or performs an action underwater. With reference to FIG. 4 and FIG. 9, a second motion state is defined as a state in which the moving apparatus moves on the target side wall 402, or the overall direction of the moving apparatus is substantially parallel to the target side wall 402. A third motion state is defined as a state in which the moving apparatus moves on the water surface 30, or the moving apparatus is at least partially exposed at the water surface 30, or the moving apparatus is entirely located under the water surface 30 and close to the water surface 30. That the moving apparatus is close to the water surface 30 may be understood as that a distance between the moving apparatus and the water surface 30 is less than a threshold and the moving apparatus can perform water surface cleaning. In the foregoing description, the overall direction of the moving apparatus is defined as a direction of a plane in which a moving mechanism of the moving apparatus, for example, a track or a moving wheel, is in contact with a to-be-cleaned surface.

In some embodiments, the moving apparatus includes an regulation assembly. The regulation assembly can be configured to regulate a force in a first direction applied to the moving apparatus or a force in a second direction applied to the moving apparatus. When forces are formed in different directions, the regulation assembly can regulate the forces, so that some forces are in the first direction or the second direction. The moving apparatus is switched between the first motion state and the third motion state by using the regulation assembly. The moving apparatus can perform underwater cleaning in the first motion state. The cleaning device can perform water surface cleaning in the third motion state. The moving apparatus is switched from the first motion state to the third motion state under an action of the force in the first direction. The moving apparatus is switched from the third motion state to the first motion state under an action of the force in the second direction.

Therefore, the moving apparatus can be switched between the position on the water surface 30 and the position under the water surface 30 by using the regulation assembly, so that the moving apparatus is switched between the first motion state and the third motion state. The moving apparatus can perform underwater cleaning in the first motion state. The moving apparatus can perform water surface cleaning in the third motion state. Therefore, the moving apparatus can be regulated to perform at least two operating conditions: underwater cleaning and water surface cleaning, thereby meeting various use requirements.

In some embodiments, the moving apparatus further operates in a second motion state. The moving apparatus can clean a pool wall or a waterline in the second motion state. Switching of the moving apparatus between the first motion state and the third motion state may include or exclude the second motion state. In other words, the moving apparatus may operate in the first motion state and the third motion state, or the moving apparatus may operate in the first motion state, the second motion state, and the third motion state. The second motion state may be selected based on an actual requirement. This is not limited herein.

In some embodiments, a first regulation assembly may be identical to a second regulation assembly. In other words, a structure of the first regulation assembly may be the same as that of the second regulation assembly. The first regulation assembly is configured to regulate the force in the first direction applied to the moving apparatus. The second regulation assembly is configured to regulate the force in the second direction applied to the moving apparatus. The force may be a force in a vertical direction, for example, an upward force in the first direction and an upward force in the second direction.

In some embodiments, the first regulation assembly includes a mode switching member 510. The mode switching member 510 may regulate the force applied to the moving apparatus in the vertical direction, so that the moving apparatus can move in the vertical direction, and the moving apparatus can be switched between the position on the water surface 30 and the position under the water surface 30. In this way, the moving apparatus is switched between the first motion state and the third motion state. The mode switching member 510 may regulate the force applied to the moving apparatus in the vertical direction, so that the moving apparatus can be switched between the position on the water surface 30 and the position under the water surface 30. When the moving apparatus is located under the water surface 30, the moving apparatus is completely immersed under the water surface 30. When the moving apparatus is located on the water surface 30, at least a part of the moving apparatus is on the water surface 30. The vertical direction may be a vertical direction of the target region 40, for example, a vertical direction of the swimming pool, namely, a direction of gravity. A horizontal direction may be a horizontal direction of the target region 40, for example, a horizontal direction of the swimming pool, namely, a direction perpendicular to the direction of gravity. By disposing the mode switching member 510, the moving apparatus can be switched between the position on the water surface 30 and the position under the water surface 30, so that the position of the moving apparatus can be regulated based on various liquid environments and requirements, and the moving apparatus can more flexibly perform corresponding operations at various positions in the liquid.

In some embodiments, the force applied to the moving apparatus in the vertical direction may include a buoyancy force applied to the moving apparatus in the vertical direction. When the force includes the buoyancy force applied to the moving apparatus in the vertical direction, the mode switching member 510 may include a buoyancy regulation assembly 511. The buoyancy regulation assembly 511 is configured to regulate the buoyancy force applied to the moving apparatus in the vertical direction.

In some embodiments, the buoyancy regulation assembly 511 may include a buoyancy cavity 5111 and a buoyancy regulation part. The buoyancy cavity 5111 is configured to accommodate liquid and/or gas. The buoyancy cavity 5111 may be, but is not limited to, an inflatable buoyancy cavity 5111, a liquid-containing buoyancy cavity 5111, a partitioned buoyancy cavity 5111, or the like. A volume of the buoyancy cavity 5111 may be preset. The buoyancy cavity 5111 may be made of a flexible material and/or a rigid material. The flexible material may include, but is not limited to, polyvinyl alcohol resin, polyethylene terephthalate, rubber, and the like. The rigid material may include, but is not limited to, glass, ceramic, phenolic plastic, polyurethane plastic, epoxy plastic, unsaturated polyester plastic, and the like. For example, the buoyancy cavity 5111 may be of a two-layer structure: an inner layer and an outer layer. The inner layer may be made of a flexible material and configured to accommodate liquid and/or gas. The outer layer is a rigid protection housing and may be configured to provide protection and stability for the inner layer.

In some embodiments, the buoyancy cavity 5111 may be disposed at any position on the moving apparatus. For example, the buoyancy cavity 5111 may be disposed at a front portion, a rear portion, and/or a middle position of the moving apparatus.

In some embodiments, the moving apparatus may include one buoyancy cavity 5111. When there is only one buoyancy cavity 5111 in the moving apparatus, the buoyancy cavity 5111 may be disposed at a central position of the moving apparatus to ensure that the moving apparatus can remain stable when a volume of the liquid and/or the gas in the buoyancy cavity 5111 is changed.

In some embodiments, the moving apparatus may include a plurality of buoyancy cavities 5111. As shown in FIG. 3, the moving apparatus may include two buoyancy cavities 5111, and the two buoyancy cavities 5111 may be symmetrically disposed in the moving apparatus. It may be understood that symmetrically disposing the two buoyancy cavities 5111 enables the moving apparatus to remain stable when the buoyancy cavities 5111 provide buoyancy forces for the moving apparatus. This prevents the moving apparatus from tilting and flipping due to an uneven buoyancy force applied to the moving apparatus under or on the water surface 30. It should be noted that a size and a position of each buoyancy cavity 5111 can be regulated based on weights and positions of various components of the moving apparatus to ensure that the moving apparatus can be in a preset state when volumes of liquid and/or gas in the buoyancy cavities 5111 are changed.

The buoyancy regulation part may be configured to regulate the volume of the gas in the buoyancy cavity 5111. The moving apparatus may regulate the volume of the liquid in the buoyancy cavity 5111 by using the buoyancy regulation part to change the buoyancy force applied to the moving apparatus in the vertical direction. For example, when the buoyancy cavity 5111 made of a flexible material is in a deflated state, the buoyancy regulation part may input gas into the buoyancy cavity 5111 through an air inlet 5113 to increase the volume of the gas in the buoyancy cavity 5111 and the buoyancy force applied to the moving apparatus in the vertical direction. It may be understood that the upward buoyancy force applied to the moving apparatus in the vertical direction is positively correlated with the volume of the gas in the buoyancy cavity 5111.

The buoyancy regulation part may be further configured to regulate a volume of the liquid in the buoyancy cavity 5111. The moving apparatus may regulate the volume of the liquid in the buoyancy cavity 5111 by using the buoyancy regulation part, to regulate the volume of the gas in the buoyancy cavity 5111 to change the buoyancy force applied to the moving apparatus in the liquid. For example, when the buoyancy cavity 5111 made of a rigid material contains liquid, the liquid may be discharged from the buoyancy cavity 5111 by using the buoyancy regulation part to increase the buoyancy force applied to the moving apparatus in the vertical direction. It may be understood that the upward buoyancy force applied to the moving apparatus in the vertical direction is negatively correlated with the volume of the liquid in the buoyancy cavity 5111. The liquid in the buoyancy cavity 5111 may be discharged through the air inlet 5113 or another inlet or outlet. The air inlet 5113 may or may not communicate with gas. When the air inlet 5113 does not communicate with the gas, a one-way valve may be disposed at the air inlet 5113. The one-way valve can prevent water outside the moving apparatus from entering the buoyancy cavity 5111 through the air inlet 5113. The air inlet 5113 may alternatively communicate with the gas. For example, the air inlet 5113 may communicate with gas on the water surface 30. Alternatively, the air inlet 5113 may communicate with a gas tank or a gas generation apparatus. The gas tank is filled with gas. The gas generation apparatus may automatically generate gas. The gas enters the buoyancy cavity through the air inlet 5113 to change a pressure inside the buoyancy cavity 5111, so that the pressure of the buoyancy cavity 5111 is in a stable state, thereby facilitating discharging of the liquid from the buoyancy cavity 5111.

The buoyancy regulation part may be any structure that can regulate the gas and/or the liquid in the buoyancy cavity 5111. As shown in FIG. 3, the buoyancy regulation part may include a buoyancy cavity pump 5112. The buoyancy cavity pump 5112 can drive the liquid in the buoyancy cavity to be discharged from the buoyancy cavity 5111. The buoyancy cavity pump 5112 may be, but is not limited to, a pneumatic pump, a hydraulic pump, or an electric pump. In an operating state, the buoyancy cavity pump 5112 can regulate the liquid and/or the gas in the buoyancy cavity 5111. In a non-operating state, the buoyancy cavity pump 5112 can prevent any liquid and/or gas outside the moving apparatus from entering the buoyancy cavity 5111, so that the buoyancy cavity 5111 is not affected by the external liquid and/or gas. The buoyancy regulation part may alternatively be another structure. For example, the buoyancy regulation part may be a piston assembly disposed inside the buoyancy cavity 5111. The piston assembly moves inside the buoyancy cavity 5111 to regulate the volume of the gas and/or liquid in the buoyancy cavity 5111.

In some embodiments, the buoyancy regulation assembly 511 may further include the air inlet 5113. The air inlet 5113 is configured to allow gas to enter the buoyancy cavity 5111. In some embodiments, the air inlet 5113 may be further configured to allow the gas to leave the buoyancy cavity 5111 or allow liquid to enter or leave the buoyancy cavity 5111. In some embodiments, the buoyancy regulation assembly 511 may further include another inlet and outlet configured to allow the gas to leave or allow the liquid to enter or leave the buoyancy cavity. The air inlet 5113 may be directly disposed on the buoyancy cavity 5111 or independent of the buoyancy cavity 5111. The air inlet 5113 may be disposed on a housing of the moving apparatus to communicate with the outside (such as external liquid or gas) for gas and/or liquid exchange. As shown in FIG. 1, the air inlet 5113 may be disposed at the top of a front tail part of the moving apparatus, so that the air inlet 5113 can more quickly communicate with the external gas above the water surface 30 in a process in which the moving apparatus floats up.

In some embodiments, the buoyancy regulation assembly 511 may further include a connection duct 5114. The connection duct 5114 is configured to transmit the gas or the liquid. The connection duct 5114 may be connected to one or more of the buoyancy cavity 5111, the buoyancy regulation part, and the air inlet 5113. As shown in FIG. 3, the moving apparatus may include two buoyancy cavities 5111, the buoyancy cavity pump 5112, the air inlet 5113, and the connection duct 5114. The buoyancy cavities 5111 may be connected to the buoyancy cavity pump 5112 through the connection duct 5114. The buoyancy cavity pump 5112 may be connected to the air inlet 5113 through the connection duct 5114. In the non-operating state, the buoyancy cavity pump 5112 has the same function as the one-way valve and can prevent the external liquid and/or gas from entering the buoyancy cavity 5111 through the air inlet 5113. In some other embodiments, when the buoyancy regulation part is a centrifugal pump or the like, the one-way valve is disposed at the connection duct 5114 to prevent the external liquid and/or gas from entering the buoyancy cavity 5111 through the air inlet 5113.

The gas in the buoyancy cavity 5111 comes from various sources. For a first source of the gas, the gas is obtained directly from the outside. For example, the moving apparatus moves along the target side wall 402 of the target region 40 to the water surface 30 to obtain external gas. For example, the external gas enters the buoyancy cavity 5111 through the air inlet 5113 to change the volume of the gas in the buoyancy cavity 5111.

For a second source of the gas, the gas is obtained indirectly from the outside. In other words, a protruding duct (not shown in the figure) is disposed on the moving apparatus. The protruding duct communicates with the air inlet 5113. An end of the protruding duct is away from the air inlet 5113, and the end extends out of the water surface to allow gas to be directly discharged or be sucked in, to change the volume of the gas in the buoyancy cavity 5111. In this way, even if the moving apparatus does not climb the wall of the target region 40 to the water surface 30, the volume of the gas in the buoyancy cavity 5111 can be changed.

For a third source of the gas, a gas generation assembly (not shown in the figure) is disposed in the moving apparatus. The gas generation assembly can generate gas to change the volume of the gas in the buoyancy cavity 5111. In this way, even if the moving apparatus does not climb the wall of the target region 40 to the water surface 30, the volume of the gas in the buoyancy cavity 5111 can be changed. This improves convenience. The gas generation assembly may generate gas through a chemical reaction, electrolysis, water boiling, and the like to increase the volume of the gas in the buoyancy cavity 5111 or reduce the volume of the liquid in the buoyancy cavity 5111.

The gas in the buoyancy cavity 5111 is discharged through the air inlet 5113, or the gas may be compressed by a compression cylinder (not shown in the figure) to reduce the volume of the gas in the buoyancy cavity 5111, so that the moving apparatus can submerge. In an actual process, the buoyancy regulation assembly 511 may not include the air inlet 5113. The volume of the gas may be changed inside the buoyancy regulation assembly 511, such as increasing the volume of the gas in the buoyancy cavity 5111 by using the gas generation assembly or reducing the volume of the gas in the buoyancy cavity 5111 by using the compression cylinder. In other embodiments, the volume of the gas may be increased or decreased in other means. This is not limited herein.

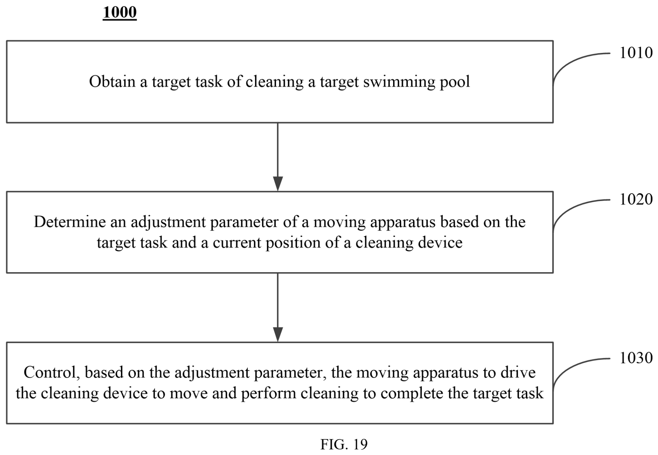

As shown in FIG. 1 and FIG. 3, when the moving apparatus needs to be switched from the position under the water surface 30 to the position on the water surface 30, the moving apparatus may move to a position close to the water surface 30 and determine when to control the buoyancy cavity pump 5112 to input gas into the buoyancy cavity 5111. For details about a moment at which the moving apparatus needs to be switched from the position under the water surface 30 to the position on the water surface 30, refer to FIG. 19 and related descriptions. As shown in FIG. 4, when the moving apparatus needs to be switched from the position under the water surface 30 to the position on the water surface 30, the moving apparatus may be tightly attached to and move on the target side wall 402 of the target region 40 to the position close to the water surface 30 and determine when to control the buoyancy regulation part to increase the volume of the gas in the buoyancy cavity 5111. For details about content that the moving apparatus is tightly attached to and moves on the target side wall 402 of the target region 40, refer to the following description.

In some embodiments, when the moving apparatus needs to be switched from the position under the water surface 30 to the position on the water surface 30, the moving apparatus may be driven under an action of a first driving force generated by a first propeller 131 to move to the position close to the water surface 30, and determine when to control the buoyancy regulation part to increase the volume of the gas in the buoyancy cavity 5111. For details about the first propeller 131 and the first driving force, refer to the following description.

In some embodiments, the moving apparatus may include a first sensor (not shown in the figure). The first sensor may be configured to determine a position of the moving apparatus in real time. The position may be a vertical position (or referred to as a depth) of the moving apparatus in the liquid. For example, the first sensor may be disposed at a central position of the moving apparatus, and the position may be a depth of the central position of the moving apparatus in the liquid. The first sensor may be, but is not limited to, a pressure sensor, an ultrasonic sensor, an optical sensor, a distance measuring sensor, an infrared sensor, a distance code disk, and the like. The moving apparatus may be further controlled by using the first sensor and the mode switching member 510 to move at a preset depth. For example, the moving apparatus performs underwater cleaning at the preset depth or moves at the preset depth toward a charging apparatus disposed at the wall of the swimming pool.

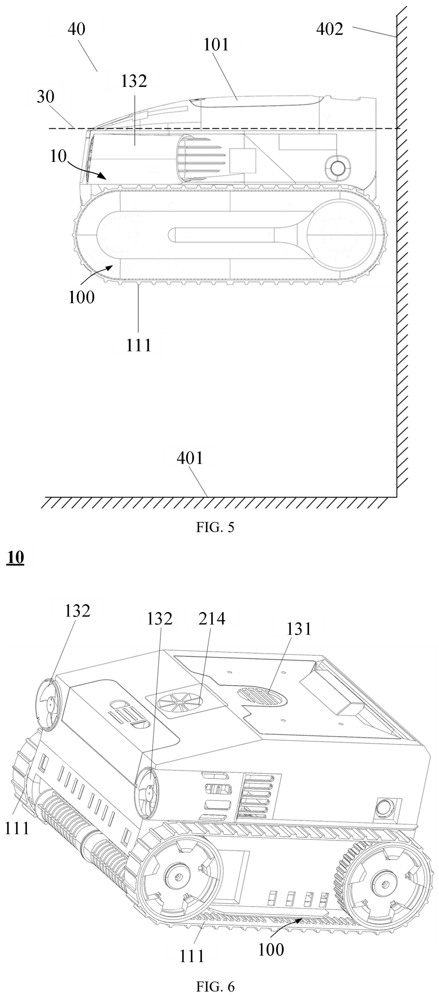

In some embodiments, the moving apparatus may further include a processor (not shown in the figure). The processor may be a micro-controller, an embedded processor, an application-specific integrated circuit (ASIC), or the like. The processor may obtain various pieces of data information of the moving apparatus and analyze the obtained data information to control various components of the moving apparatus. When the moving apparatus needs to be switched from the position under the water surface 30 to the position on the water surface 30, the processor may obtain the position of the moving apparatus in real time from the first sensor. When the position of the moving apparatus meets a preset condition, the processor may control the buoyancy regulation part to increase the volume of the gas in the buoyancy cavity 5111. The preset condition may include a condition that the position of the moving apparatus is higher than a preset height. When a depth of the liquid in the target region 40 is fixed, the processor may determine whether the position of the moving apparatus meets the preset condition to determine whether the air inlet 5113 of the moving apparatus is above the water surface 30. When the position of the moving apparatus shown in FIG. 4 meets the preset condition, the processor may determine that the air inlet 5113 of the moving apparatus is above the water surface 30, the processor may control the buoyancy cavity pump 5112 to drive the liquid to be discharged from the buoyancy cavity 5111, and air may enter the buoyancy cavity 5111 through the air inlet 5113, to increase the volume of the gas in the buoyancy cavity 5111 and increase the buoyancy force applied to the moving apparatus. When the buoyancy force applied to the moving apparatus in the vertical direction is greater than gravity of the moving apparatus, the moving apparatus shown in FIG. 4 is switched to a posture of the moving apparatus shown in FIG. 5.

In some embodiments, the moving apparatus may further include a second sensor (not shown in the figure). The second sensor may be configured to detect in real time whether the air inlet 5113 of the buoyancy cavity 5111 is exposed to the air. For example, the second sensor may be an ultrasonic sensor. The second sensor may be disposed at the air inlet 5113 of the buoyancy cavity 5111. In some embodiments, the second sensor may alternatively be disposed at other positions on the moving apparatus and obtain, through position conversion, a detection result of whether the air inlet 5113 is exposed to the air.

In some embodiments, when the moving apparatus needs to be switched from the position under the water surface 30 to the position on the water surface 30, the processor may obtain the detection result of whether the air inlet 5113 of the buoyancy cavity 5111 is exposed to the air. When the detection result indicates that the air inlet 5113 is exposed to the air, the buoyancy regulation part is controlled to increase the volume of the gas in the buoyancy cavity 5111, so that the moving apparatus is switched from the position under the water surface 30 to the position on the water surface 30. For details about content that the processor controls the buoyancy regulation part to increase the volume of the gas in the buoyancy cavity 5111 to switch the moving apparatus from the position under the water surface 30 to the position on the water surface 30, refer to the above description.

When the moving apparatus needs to be switched from the position on the water surface 30 to the position under the water surface 30, the processor may control the buoyancy regulation part to reduce the volume of the gas in the buoyancy cavity 5111. For details about a moment at which the moving apparatus needs to be switched from the position on the water surface 30 to the position under the water surface 30, refer to FIG. 19 and related descriptions. As shown in FIG. 1 and FIG. 3, the processor may control the buoyancy regulation part to drive the gas to be discharged from the buoyancy cavity 5111 through the connection duct 5114 to reduce the volume of the gas in the buoyancy cavity 5111 to reduce the buoyancy force, so that the moving apparatus is switched from the position on the water surface 30 to the position under the water surface 30.

The buoyancy regulation assembly 511 is disposed to regulate the buoyancy force applied to the moving apparatus in the vertical direction, so that the moving apparatus is flexibly switched between the position on the water surface 30 and the position under the water surface 30. This improves the operating efficiency and reliability of the moving apparatus in the liquid environment. The first sensor or the second sensor is disposed, so that the moving apparatus can automatically determine an environment in which the air inlet 5113 is located. This improves the use efficiency of the moving apparatus.

In some embodiments, switching of the moving apparatus between the position on the water surface and the position under the water surface includes operating from the first motion state to the third motion state and operating from the third motion state to the first motion state. It may be understood that switching of the moving apparatus between the first motion state and the third motion state may be implemented by using the mode switching member 510, the first sensor, and the second sensor that are disposed in the moving apparatus.

When the buoyancy force is regulated with gas in the buoyancy cavity 5111, and the air inlet 5113 or an air outlet of the buoyancy cavity 5111 is located on the water surface, the buoyancy cavity pump 5112 is started to regulate the volume of the gas in the buoyancy cavity 5111. In this case, the moving apparatus may be switched from the first motion state to the second motion state until the air inlet 5113 is exposed above the water surface. Then, a posture of the moving apparatus is regulated until the moving apparatus is in the third motion state. In this way, the moving apparatus is switched from the position under the water surface to the position on the water surface. After the moving apparatus completes water surface cleaning, the filtering box 711 is cleaned at the water surface, or the moving apparatus is charged at the water surface, the moving apparatus needs to be switched from the third motion state to the first motion state to continue cleaning the bottom of the swimming pool. In this case, the buoyancy cavity pump 5112 may be started or the volume of the gas in the buoyancy cavity 5111 may be regulated when the moving apparatus is in the third motion state, to reduce the buoyancy force. The moving apparatus is switched from the third motion state to the first motion state under an action of the gravity thereof. In addition, a posture sensor disposed on the moving apparatus may cooperate with a controller to control the posture of the moving apparatus to be stable during state switching.

When the buoyancy force is regulated with liquid in the buoyancy cavity 5111, the buoyancy cavity 5111 may be a rigid and confined cavity, and water is filled into or discharged from the buoyancy cavity 5111 by using the buoyancy regulation part. When water is filled into the buoyancy cavity 5111 by using the buoyancy regulation part, the gas in the buoyancy cavity 5111 is discharged, so that the moving apparatus can conveniently submerge. When water is discharged from the buoyancy cavity 5111 by using the buoyancy regulation part, the liquid is discharged from the buoyancy cavity 5111 to reduce the overall gravity of the moving apparatus, so that the moving apparatus can conveniently float up. The moving apparatus may be switched from the first motion state to the third motion state by discharging the water from the buoyancy cavity 5111 and by using another upward force. In this case, the moving apparatus does not need to be switched to the second motion state. The moving apparatus may be switched from the third motion state to the first motion state by filling water into the buoyancy cavity 5111 and by using another downward force.

When the buoyancy force is regulated with gas in the buoyancy cavity 5111, the volume of the gas in the buoyancy cavity 5111 is regulated to be a gas volume threshold, so that forces applied to the moving apparatus in the vertical direction are balanced. In this way, when the moving apparatus cleans the wall of the pool, the moving apparatus can be attached to the wall of the pool in the vertical direction and therefore can better clean the wall of the pool. When the moving apparatus is in the third motion state, there is a first volume of the gas in the buoyancy cavity 5111. When the moving apparatus is in the first motion state, there is a second volume of the gas in the buoyancy cavity 5111. The gas volume threshold is a value between the second gas volume and the first gas volume.

Similarly, when the buoyancy force is regulated with liquid in the buoyancy cavity 5111, the volume of the liquid in the buoyancy cavity 5111 is regulated to be a liquid volume threshold, so that forces applied to the moving apparatus in the vertical direction are balanced. When the moving apparatus cleans the wall of the pool, the moving apparatus can be attached to the wall of the pool in the vertical direction and therefore can better clean the wall of the pool. When the moving apparatus is in the third motion state, there is a first volume of liquid in the buoyancy cavity 5111. When the moving apparatus is in the first motion state, there is a second volume of liquid in the buoyancy cavity 5111. The liquid volume threshold is a value between the first liquid volume and the second liquid volume.

In some embodiments, the force applied to the moving apparatus in the vertical direction may include the first driving force applied to the moving apparatus in the vertical direction. The regulation assembly includes a first regulation assembly. The first regulation assembly is configured to regulate the force in the first direction applied to the moving apparatus. The force in the first direction is the first driving force in the vertical direction. The first driving force extends along the first direction. The first regulation assembly includes at least one of a first propulsion part, a biomimetic fin member, a lifting propulsion assembly, or an umbrella mechanism. For example, the first regulation assembly may include one, two, three, or four of the first propulsion part, the biomimetic fin member, the lifting propulsion assembly, and the umbrella mechanism. For example, the first regulation assembly may include the first propulsion part, or the first regulation assembly may include the first propulsion part and the biomimetic fin member, or the first regulation assembly may include the first propulsion part, the biomimetic fin member, the lifting propulsion assembly, and the umbrella mechanism.

In some embodiments, the regulation assembly includes a second regulation assembly. The second regulation assembly is configured to regulate the force in the second direction applied to the moving apparatus. The force in the second direction is the first driving force in the vertical direction. The first driving force extends along the second direction. The second regulation assembly includes at least one of a first propulsion part or a biomimetic fin member. For example, the second regulation assembly may include the first propulsion part, or the second regulation assembly may include the biomimetic fin member, or the second regulation assembly may include the first propulsion part and the biomimetic fin member.

Each of the first regulation assembly and the second regulation assembly may be the first propulsion part, or each of the first regulation assembly and the second regulation assembly may be the biomimetic fin member.

In some embodiments, the first regulation assembly may be identical to the second regulation assembly. In other words, a structure of the first regulation assembly may be the same as that of the second regulation assembly. Certainly, in some other embodiments, the structure of the first regulation assembly and the structure of the second regulation assembly may be different. Structures of the first regulation assembly and the second regulation assembly may be determined based on an actual requirement. This is not limited herein.

In some embodiments, the first regulation assembly or the second regulation assembly may include a plurality of biomimetic fin members (not shown in the figure). The biomimetic fin member may oscillate over the moving apparatus to switch the moving apparatus between the position on the water surface 30 and the position under the water surface 30, so that the moving apparatus can float up and submerge. The moving apparatus can operate stably in the liquid and can be quickly switched between the position under the water surface 30 and the position on the water surface 30 by using the biomimetic fin member. When the biomimetic fin member is not needed, the biomimetic fin member may be folded on a peripheral surface of the moving apparatus.

The biomimetic fin member may be, but is not limited to, at least one of a biomimetic fish fin, a biomimetic turtle fin, a biomimetic pectoral fin, or a biomimetic tail fin. There may be, but is not limited to, two, three, and four biomimetic fin members. A plurality of oscillating bars oscillate, so that the biomimetic fin member oscillates over the moving apparatus. The oscillating bars are driven by a drive assembly or the like to oscillate.

In some embodiments, the first regulation assembly includes a lifting propulsion assembly (not shown in the figure). The lifting propulsion assembly is configured to allow the moving apparatus to be switched from the position under the water surface 30 to the position on the water surface 30 and/or to fly out from the water surface 30. In this way, the moving apparatus can float up or fly out. When the lifting propulsion assembly flies out from the water surface 30, the moving apparatus may fly toward a station disposed on the poolside, so that the moving apparatus can be charged or perform self-cleaning. When the lifting propulsion assembly is not needed, the lifting propulsion assembly may be folded on the peripheral surface of the moving apparatus. The lifting propulsion assembly may be of any structure, provided that the moving apparatus can fly out from the water surface 30. For example, the lifting propulsion assembly may include a plurality of rotor wings. The plurality of rotor wings may rotate, so that the moving apparatus flies out from the water surface 30.

In some embodiments, the first regulation assembly includes the umbrella assembly (not shown in the figure). The umbrella assembly is disposed on the moving apparatus. The umbrella assembly is configured to allow the moving apparatus to be switched from the position under the water surface 30 to the position on the water surface 30, so that the moving apparatus can float up. Further, the umbrella assembly includes a support skeleton and an umbrella surface. When the moving apparatus needs to float up, the support skeleton and the umbrella surface in the umbrella assembly are spread out to provide the upward buoyancy force, so that the moving apparatus can float up. When the moving apparatus does not need to float up, the umbrella assembly can be stored and folded.

The umbrella assembly is disposed around the moving apparatus to increase uniformity of the buoyancy force, or a position at which the umbrella assembly is disposed may be related to a position at which the moving apparatus emerges from the water surface 30. When the top of the moving apparatus needs to emerge from the water surface 30, the umbrella assembly is disposed on the top of the moving apparatus. When the entire moving apparatus needs to emerge from the water surface 30, the umbrella assembly is disposed at the bottom of the moving apparatus.

In some embodiments, the moving apparatus is detachably connected to a first buoyancy assembly and/or a gravity assembly. In other words, the moving apparatus is detachably connected to the first buoyancy assembly, or the moving apparatus is detachably connected to the gravity assembly, or the moving apparatus is detachably connected to the first buoyancy assembly and the gravity assembly. The first buoyancy assembly may include a foam assembly. The foam assembly is made of foam and the like. The gravity assembly may include a counterweight assembly. The counterweight assembly includes a counterweight block. The first buoyancy assembly and/or the gravity assembly are/is disposed on a docking assembly disposed in the target region 40. The docking assembly may be a station, a positioning post, or a positioning apparatus. The docking assembly is disposed close to the target side wall 402 or located in the target region 40.

When the moving apparatus submerges, in a process of switching the moving apparatus from the position under the water surface 30 to the position on the water surface 30, the moving apparatus seeks the docking assembly under the water surface 30 and is docked with the docking assembly (not shown in the figure), so that the moving apparatus is connected to the first buoyancy assembly. In a process of switching the moving apparatus from the position on the water surface 30 to the position under the water surface 30, the moving apparatus seeks the docking assembly on the water surface 30 and is docked with the docking assembly, so that the moving apparatus is separated from the first buoyancy assembly.

When the moving apparatus is in a floating state, in the process of switching the moving apparatus from the position under the water surface 30 to the position on the water surface 30, the moving apparatus seeks the docking assembly and is docked with the docking assembly, so that the gravity assembly is removed from the moving apparatus. In the process of switching the moving apparatus from the position on the water surface 30 to the position under the water surface 30, the moving apparatus seeks the docking assembly, so that the moving apparatus is connected to the gravity assembly. It should be noted that both the first buoyancy assembly and the gravity assembly may be mechanical assemblies which are different components in a floating-submerging system. When the mechanical assembly is in a floating state in the liquid, the mechanical assembly is the first buoyancy assembly. When the mechanical assembly is in a submerging state in the liquid, the mechanical assembly is the gravity assembly.

In some embodiments, the moving apparatus is telescopically connected to a second buoyancy assembly. The second buoyancy assembly floats on the water surface 30 of the target region 40. The second buoyancy assembly is made of foam, or the second buoyancy assembly may be a mechanical assembly, and the mechanical assembly is a part of the moving apparatus.

When the moving apparatus is switched from the position on the water surface 30 to the position under the water surface 30 or submerges in the liquid, the second buoyancy assembly extends and is separated from the moving apparatus, and the second buoyancy assembly floats on the water surface 30, so that the moving apparatus submerges. In this case, the moving apparatus may pull the second buoyancy assembly when moving on the target bottom wall 401. When the moving apparatus is switched from the position under the water surface 30 to the position on the water surface 30 or floats up, the second buoyancy assembly is retracted into the moving apparatus. In other words, the moving apparatus and the second buoyancy assembly are combined, so that the moving apparatus floats up.

The moving apparatus may be telescopically connected to the second buoyancy assembly through, but not limited to, a reel (not shown in the figure). For example, when the moving apparatus is in the submerging state, the second buoyancy assembly is ejected from the moving apparatus through the reel. When the moving apparatus is in the floating state, the second buoyancy assembly is retracted into the moving apparatus through the reel.

In some embodiments, the moving apparatus includes a first functional assembly (not shown in the figure) and a second functional assembly (not shown in the figure). The first functional assembly includes different first functional sub-assemblies (not shown in the figure). The first functional sub-assembly may correspond to a mechanical assembly for the moving apparatus to move and operate on the water surface 30. The second functional assembly includes different second functional sub-assemblies (not shown in the figure). The second functional sub-assembly may correspond to a mechanical assembly for the moving apparatus to move and operate under the water surface 30. A density of the first functional sub-assembly is less than a density of the liquid in the target region 40. In other words, the first functional sub-assembly floats or floats up when the first functional sub-assembly is separated from the moving apparatus. A density of the second functional sub-assembly is greater than the density of the liquid in the target region 40. In other words, the second functional sub-assembly sinks or submerges when the second functional sub-assembly is separated from the moving apparatus.

When the moving apparatus needs to be switched from the first motion state to the third motion state, the second functional sub-assembly is separated from the moving apparatus, and the first functional sub-assembly is added to the moving apparatus. In other words, the first functional sub-assembly for the moving apparatus to move and operate on the water surface 30 is added to the moving apparatus, and the second functional sub-assembly for the moving apparatus to move and operate under the water surface 30 is separated from the moving apparatus.

When the moving apparatus is switched from the third motion state to the first motion state, the first functional sub-assembly is separated from the moving apparatus, and the second functional sub-assembly is added to the moving apparatus. In other words, the first functional sub-assembly for the moving apparatus to move and operate on the water surface 30 is separated from the floating-submerging system, and the second functional sub-assembly for the moving apparatus to move and operate under the water surface 30 is added to the moving apparatus.

In some embodiments, the force applied to the moving apparatus in the vertical direction may include the first driving force applied to the moving apparatus in the vertical direction. The first regulation assembly includes a first propulsion part (not shown in the figure). The first propulsion part may be configured to regulate the first driving force applied to the moving apparatus in the vertical direction. The first propulsion part may be any structure that can provide the first driving force. For example, the first propulsion part may be a screw propeller, and the screw propeller may be vertically disposed on the moving apparatus. The screw propeller rotates, so that the moving apparatus can obtain the first driving force in the vertical direction. The first driving force in the vertical direction may be upward or downward. under an action of the first driving force, the moving apparatus may move upward or downward in the vertical direction, or may suspend at a certain position in the liquid.

In some embodiments, as shown in FIG. 5, the first propulsion part may include a first propeller 131. The first propeller 131 may be configured to push the liquid to move in a first preset direction. The first preset direction may be a direction in which the first propeller 131 pushes the liquid to be discharged. When the first propeller 131 pushes the liquid to move in the first preset direction, a reforce in a direction opposite to the first preset direction may be applied to the moving apparatus. The reforce may include the first driving force. It should be understood that because the moving apparatus needs to obtain the first driving force in the vertical direction, the first preset direction at least tilts in the vertical direction to ensure that the obtained reforce has a component force in the vertical direction, namely, the first driving force. Therefore, an angle between the first preset direction and the vertical direction may be in a range of [0°, 90°).

The first driving force may be positively correlated with a speed at which the liquid moves in the first preset direction. A higher speed at which the liquid moves in the first preset direction indicates a larger reforce applied to the moving apparatus in the direction opposite to the first preset direction and indicates a larger first driving force in the vertical direction.

The first driving force may be negatively correlated with the angle between the first preset direction and the vertical direction. When the liquid moves at the same speed in the first preset direction, a larger angle between the first preset direction and the vertical direction indicates a smaller first driving force applied to the moving apparatus in the vertical direction. As shown in FIG. 10, when the angle between the first preset direction and the vertical direction is 0°, the reforce applied to the moving apparatus may be fully converted into the first driving force in the vertical direction.

The moving apparatus includes one or more first propellers 131. The first propeller 131 may be disposed at various positions on the moving apparatus. As shown in FIG. 6 and FIG. 10, the first propeller 131 may be vertically disposed at a central position of the moving apparatus to ensure balance of the moving apparatus in a moving process. The first propeller 131 may include a first impeller 1311 and a first propeller motor 1312. The first impeller 1311 may rotate to drive the liquid to move in the first preset direction. When the liquid moves in the first preset direction, the first driving force is applied to the moving apparatus in the vertical direction. The first propeller motor 1312 may provide power for the first impeller 1311. As shown in FIG. 10, the first propeller 131 of the moving apparatus may include two first propeller openings 1313. One first propeller opening 1313 of the first propeller 131 may be located at the top of the moving apparatus, and the other first propeller opening 1313 of the first propeller 131 may be located at the bottom of the moving apparatus. The first impeller 1311 may be driven by the first propeller motor 1312, so that liquid is sucked in through one of the two first propeller openings 1313, and liquid is discharged through the other of the two first propeller openings 1313. In this way, the moving apparatus obtains the first driving force in the vertical direction. When the moving apparatus is located in the liquid, the moving apparatus may regulate a rotation direction (such as a forward rotation or a reverse rotation) of the first impeller 1311 to regulate the first preset direction to regulate the direction of the first driving force. In this way, the moving apparatus is switched between the position on the water surface 30 and the position under the water surface 30. The first propeller 131 is disposed, so that the moving apparatus can be quickly and conveniently switched between the position on the water surface 30 and the position under the water surface 30.

In some embodiments, the moving apparatus may further move in a horizontal direction of the target region 40. The force applied to the moving apparatus in the horizontal direction may include the second driving force applied to the moving apparatus in the horizontal direction. The moving apparatus includes a movement propulsion system 100. The movement propulsion system 100 includes a second propulsion part. The second propulsion part may be configured to regulate the second driving force applied to the moving apparatus in the horizontal direction. The second propulsion part may be any structure that can provide the second driving force. For example, the second propulsion part may be a screw propeller, and the screw propeller may be horizontally disposed on the moving apparatus. The screw propeller rotates, so that the moving apparatus can obtain the second driving force in the horizontal direction. The second driving force in the horizontal direction may be forward or backward. under an action of the second driving force, the moving apparatus may move forward or backward in the horizontal direction, or may suspend at a certain position in the liquid.

In some embodiments, as shown in FIG. 1 and FIG. 6, the second propulsion part includes a second propeller 132. The second propeller 132 can push the liquid to move in a second preset direction to generate a second driving force in the horizontal direction. The moving apparatus may move in the horizontal direction under an action of the second driving force. The second preset direction may be a direction in which the second propeller 132 pushes the liquid to be discharged. Similar to the first propeller 131, because the moving apparatus needs to obtain the second driving force in the horizontal direction, the second preset direction at least tilts in the horizontal direction to ensure that the obtained reforce has a component force in the horizontal direction, namely, the second driving force. Therefore, an angle between the second preset direction and the horizontal direction may be in a range of (-90°, 0°].

Similar to the first propeller 131, the second driving force may be positively correlated with a speed at which the liquid moves in the second preset direction. A higher speed at which the liquid moves in the second preset direction indicates a larger reforce applied to the moving apparatus in a direction opposite to the second preset direction and indicates a larger second driving force in the horizontal direction. The second driving force may be negatively correlated with the angle between the second preset direction and the horizontal direction. When the liquid moves at the same speed in the second preset direction, a larger angle between the second preset direction and the horizontal direction indicates a smaller second driving force applied to the moving apparatus in the horizontal direction. As shown in FIG. 10, when the angle between the second preset direction and the horizontal direction is 0°, the reforce applied to the moving apparatus may be fully converted into the second driving force in the horizontal direction.

Similar to the first propeller 131, the second propeller 132 may also include a second impeller and a second propeller motor. For details about the second impeller and the second propeller motor, refer to the above description. From the above description, in terms of an overall direction of the moving apparatus, the first preset direction is substantially perpendicular to the overall direction of the moving apparatus, that is, perpendicular to a direction of a plane in which the moving apparatus is in contact with the to-be-cleaned surface, and the second preset direction is substantially parallel to the overall direction of the moving apparatus, that is, parallel to the direction of the plane in which the moving apparatus is in contact with the to-be-cleaned surface, and the second preset direction is consistent with a forward direction of the moving apparatus.

The moving apparatus may include one or more second propellers 132. The second propeller 132 may be disposed at the bottom of the moving apparatus. For example, when the moving apparatus includes only one second propeller 132, the second propeller 132 may be horizontally disposed at a center position of the bottom of the moving apparatus to ensure balance of the moving apparatus. In some embodiments, the second propeller 132 may alternatively be disposed on a side of the moving apparatus. It should be noted that when the second propeller 132 is disposed on the side of the moving apparatus, the second propeller 132 should be at least partially located under a position at which the moving apparatus floats on the water surface 30 to ensure that when the moving apparatus floats on the water surface 30, the second impeller of the second propeller 132 can rotate to push the liquid to move in the second preset direction to provide the moving apparatus with the second driving force in the horizontal direction. In some embodiments, when the second propeller 132 is disposed on the side of the moving apparatus, the second propeller 132 may be completely located under the position at which the moving apparatus floats on the water surface 30.

In some embodiments, at least one second propeller 132 may be disposed on each of a left side and a right side of the moving apparatus. As shown in FIG. 6, one second propeller 132 may be disposed on each of the left side and the right side of the moving apparatus. When the moving apparatus moves in the liquid, the moving apparatus may regulate a power of a second motor of the second propeller 132 on each of the left side and the right side to regulate a speed at which the liquid is pushed by the second propeller 132 on each of the left side and the right side to move in the second preset direction, so that the moving apparatus can make a turn. For example, when the speed at which the liquid is pushed by the second propeller 132 on the left side to move in the second preset direction is greater than the speed at which the liquid is pushed by the second propeller 132 on the right side to move in the second preset direction, the moving apparatus may turn to the right under an action of the second propeller 132 on the left side.

In some embodiments, the moving apparatus includes at least one set of a first power water inlet portion (not shown in the figure) and a first power water outlet portion (not shown in the figure). There may be one or two sets of the first power water inlet portions and the first power water outlet portions, and a quantity of sets may be determined based on arrangement of the first propulsion part and the second propulsion part. When the moving apparatus includes the first propulsion part or the second propulsion part, the moving apparatus includes one set of the first power water inlet portion and the first power water outlet portion. When the moving apparatus includes both the first propulsion part and the second propulsion part, two sets of the first power water inlet portions and the first power water outlet portions are included.

One set of the first power water inlet portion and the first power water outlet portion is disposed on the moving apparatus. The first propulsion part communicates with the first power water inlet portion and the first power water outlet portion. When the first propulsion part operates, liquid is sucked in through one of the first power water inlet portion and the first power water outlet portion and is discharged through the other of the first power water inlet portion and the first power water outlet portion. In this way, the moving apparatus obtains the first driving force in the vertical direction. The set of the first power water inlet portion and the first power water outlet portion extends along the vertical direction. Specifically, when the first propulsion part is the first propeller 131, the first power water inlet portion is the first propeller opening 1313, and the second power water outlet portion is the other first propeller opening 1313.

In some embodiments, the other set of the first power water inlet portion and the first power water outlet portion are disposed on the moving apparatus. The second propulsion part communicates with the other set of the first power water inlet portion and the first power water outlet portion. When the second propulsion part operates, liquid is sucked in through one of the first power water inlet portion and the first power water outlet portion of the other set and is discharged through the other of the first power water inlet portion and the first power water outlet portion of the other set. In this way, the moving apparatus obtains the second driving force in the horizontal direction. The other set of the first power water inlet portion and the first power water outlet portion extends along the horizontal direction.

The first regulation assembly may be, but is not limited to, the first propeller 131, a first drum fan, and a first water pump. The second regulation assembly may be, but is not limited to, the second propeller 132, a second drum fan, and a second water pump. The propeller, the drum fan, and the water pump communicate with the first power water inlet portion and the first power water outlet portion. The propeller, the drum fan, and the water pump rotate forward or reversely, so that the moving apparatus can move upward and downward in the vertical direction and move forward and backward in the horizontal direction. In this way, the moving apparatus can be switched between the position on the water surface 30 and the position under the water surface 30 and can be switched between a front position and a rear position in the liquid in the horizontal direction.

In some embodiments, the moving apparatus includes at least one set of a second power water inlet portion (not shown in the figure) and a second power water outlet portion (not shown in the figure). The second power water inlet portion and the second power water outlet portion are rotatably disposed on the moving apparatus. In other words, the configuration of the second power water inlet portion and the second power water outlet portion is different from the configuration of the first power water inlet portion and the first power water outlet portion, that is, angles of the second power water inlet portion and the second power water outlet portion can be regulated to change the flow direction of the liquid.

One group of first propulsion parts communicates with the second power water inlet portion and the second power water outlet portion. When the second propulsion part operates, liquid is sucked in through one of the second power water inlet portion and the second power water outlet portion and is discharged through the other of the second power water inlet portion and the second power water outlet portion. Because the second power water inlet portion and the second power water outlet portion are rotatably disposed on the moving apparatus, the moving apparatus obtains propulsion forces in various directions. The propulsion forces include the first driving force in the vertical direction.

In some embodiments, the second propulsion part communicates with the second power water inlet portion and the second power water outlet portion. When the second propulsion part operates, liquid is sucked in through one of the second power water inlet portion and the second power water outlet portion of the other set and is discharged through the other of the second power water inlet portion and the second power water outlet portion of the other set. Because the second power water inlet portion and the second power water outlet portion are rotatably disposed on the moving apparatus, the moving apparatus obtains propulsion forces in various directions. The propulsion forces include the second driving force in the horizontal direction.

The second power water inlet portion can rotate relative to the moving apparatus through cooperation between one power motor and one power transmission mechanism. The second power water outlet portion can rotate relative to the moving apparatus through cooperation between the other power motor and the other power transmission mechanism.

In some embodiments, the first power water inlet portion and the first power water outlet portion are disposed on the moving apparatus to provide propulsion forces in various directions by regulating a direction of a water spray duct (not shown in the figure). When the first propulsion part includes the water pump, the water pump communicates with the first power water outlet portion through the water spray duct. The water spray duct may extend at various angles. When the liquid enters or is discharged from the water spray duct, propulsion forces in various directions may be provided. When the first power water inlet portion, the first power water outlet portion, and the first propulsion part communicate, the propulsion forces may include the first driving force in the vertical direction. When the first power water inlet portion, the first power water outlet portion, and the second propulsion part communicate, the propulsion forces include the second driving force in the horizontal direction.

Certainly, in other embodiments, a first guiding structure (not shown in the figure) is disposed on a path in which the first power water inlet portion, the first propulsion part, and the first power water outlet portion are disposed. The flow direction of the liquid is changed by the first guiding structure to provide propulsion forces in various directions. Similarly, a second guiding structure (not shown in the figure) is disposed on a path in which the first power water inlet portion, the second propulsion part, and the first power water outlet portion are disposed. The flow direction of the liquid is changed by the second guiding structure to provide propulsion forces in various directions. Specific structures of the first guiding structure and the second guiding structure are not limited herein, provided that the first guiding structure and the second guiding structure can change the flow direction of the liquid.

In addition, one of the second propeller 132 on the left side and the second propeller 132 on the right side is regulated to be opened, and the other of the second propeller 132 on the left side and the second propeller 132 on the right side is regulated to be closed, so that the moving apparatus can rotate at a high speed in situ to increase a lifting force or a descending force. In this way, the moving apparatus can float up or submerge. A movement speed of the first propeller 131 or the second propeller 132 may be determined as required. This is not limited herein. The second propeller 132 is disposed, so that the position of the moving apparatus can be switched in the horizontal direction. For example, the moving apparatus may move straight or make a turn in the horizontal direction. This can expand functions of the moving apparatus, so that the moving apparatus is applicable to more usage scenarios.

In some embodiments, the moving apparatus includes at least one first wheel 1121. There may be two or more first wheels 1121. The first wheel 1121 is disposed at the bottom of the moving apparatus. Drive paddles 11211 are disposed on an outer side surface of the first wheel 1121. The drive paddles 11211 are detachably or fixedly connected to the outer side surface of the first wheel 1121. When the moving apparatus moves on the water surface 30, the drive paddles 11211 are at least partially located under the water surface 30, and the first wheel 1121 rotates to generate the second driving force applied to the moving apparatus in the horizontal direction. In other words, when the moving apparatus moves on the water surface 30, the drive paddles 11211 are at least partially exposed above the water surface 30, and the drive paddles 11211 are at least partially located under the water surface 30. The first wheel 1121 rotates to drive the drive paddles 11211 to rotate. A part of the drive paddle 11211 located under the water surface 30 generates a certain force with the liquid for regulating the second driving force applied to the moving apparatus in the horizontal direction, so that the moving apparatus moves forward in the second direction. When the moving apparatus moves on the target bottom wall 401, the drive paddles 11211 are completely submerged, and a forward force in the second direction applied to the moving apparatus and a backward force in the second direction applied to the moving apparatus cancel each other out, so that movement of the moving apparatus on the target bottom wall 401 is not affected.

The drive paddles 11211 are disposed on the first wheel 1121 to provide the second driving force in the second direction for the moving apparatus to push the moving apparatus to move forward and backward in the second direction. Because an action of the drive paddles 11211 is the same as that of the second propeller 132, to some extent, the drive paddles 11211 may replace the second propeller 132. This reduces a quantity of components, costs, and a weight of the apparatus.

In some embodiments, there are a plurality of drive paddles 11211. The plurality of drive paddles 11211 are disposed along a radial direction of the first wheel 1121. There may be, but is not limited to, three, four, five, six, or more drive paddles 11211. In some embodiments, the moving apparatus includes at least one second wheel 1122. The second wheel 1122 is disposed at the bottom of the moving apparatus. The first wheel 1121 and the second wheel 1122 drive the moving apparatus to move in the horizontal direction. When the moving apparatus is located on the target bottom wall 401 of the target region 40, the first wheel 1121 and the second wheel 1122 operate to drive the moving apparatus to move on the target bottom wall 401 and the target side wall 402 and move from the target bottom wall 401 to the target side wall 402.

In some embodiments, the moving apparatus includes a movement propulsion system 100. The movement propulsion system 100 includes the first wheel 1121, the second wheel 1122, and the track 111. The first wheel 1121 is in transmission connection to the second wheel 1122 through the track 111. In other words, the first wheel 1121 and the second wheel 1122 rotate with the track 111. The track 111 can operate to drive the moving apparatus to move. The track 111 can drive the moving apparatus to move in the horizontal direction. As shown in FIG. 7, when the moving apparatus is located on the target bottom wall 401 of the target region 40, the track 111 can operate to drive the moving apparatus to move on the target bottom wall 401. The track 111 can further drive the moving apparatus to move in the vertical direction. As shown in FIG. 4 and FIG. 9, when the moving apparatus is tightly attached to the target side wall 402 of the target region 40, the track 111 can operate to drive the moving apparatus to move on the target side wall 402. For details about how the moving apparatus is tightly attached to the target side wall 402 of the target region 40, refer to the following description.

In some embodiments, the track 111 enables the moving apparatus to move from the target bottom wall 401 to the target side wall 402. As shown in FIG. 8, when the track 111 moves to a joint between the target bottom wall 401 and the target side wall 402, a part of the track 111 moves on the target side wall 402, and another part of the track 111 moves on the target bottom wall 401. The part of the track 111 on the target side wall 402 can drive the moving apparatus to move upward until the moving apparatus moves from the target bottom wall 401 to the target side wall 402. After the moving apparatus moves from the target bottom wall 401 to the target side wall 402, the moving apparatus may be driven by the track 111 to move on the target side wall 402. The moving apparatus can move on the target side wall 402 under an action of the second driving force provided by the second propeller 132 after the second propeller 132 changes a rotation direction. The moving apparatus can move on the target side wall 402 under an action of a third driving force provided by a main water pump 210. For details about the main water pump 210 and the third driving force provided by the main water pump 210, refer to the following description. The track 111 is disposed, so that the moving apparatus can move at various positions in the liquid, and the moving apparatus can move from the target bottom wall 401 to the target side wall 402.

In some embodiments, the moving apparatus includes a drive mechanism. The drive mechanism may further include the main water pump 210. The main water pump 210 may be configured to drive liquid to be sucked in the moving apparatus through a water inlet and liquid to be discharged from the moving apparatus through a water outlet. The water inlet may include one or more inlets for liquid to enter the moving apparatus. As shown in FIG. 6, FIG. 10, FIG. 11, and FIG. 12, a main pump water inlet 213 of the moving apparatus may serve as an inlet configured to allow liquid to enter the moving apparatus, namely, the water inlet. The water outlet includes one or more outlets for liquid to be discharged from the moving apparatus into the target region 40. As shown in FIG. 6, FIG. 10, FIG. 11, and FIG. 12, a main pump water outlet 214 of the moving apparatus may serve as an outlet configured to allow the liquid in the moving apparatus to be discharged from the moving apparatus into the target region 40, namely, the water outlet.

Similar to the first propeller 131, the main water pump 210 may also include an impeller and a motor. The impeller may be driven by the motor to rotate, so that liquid in the target region 40 is sucked in through the water inlet, and liquid in the moving apparatus is discharged into the target region 40 through the water outlet. In some embodiments, the moving apparatus may regulate a rotation direction of the impeller of the main water pump 210 to switch functions of the main pump water inlet 213 and the main pump water outlet 214. For example, when the impeller of the main water pump 210 rotates reversely, the main pump water inlet 213 may be configured to allow liquid to be discharged, and the main pump water outlet 214 may be configured to allow liquid to be sucked in.

In some embodiments, when the moving apparatus is located on the target side wall 402, the water outlet (such as the main pump water outlet 214) may at least face the interior of the target region 40 and be parallel to the horizontal direction or tilt downward in the vertical direction to ensure that, when the main water pump 210 operates, and the liquid is discharged through the main pump water outlet 214, the third driving force can be applied to the moving apparatus to drive the moving apparatus to be tightly attached to the target side wall 402. The third driving force may be a reforce applied to the moving apparatus when the main water pump 210 drives the liquid to be discharged through the main pump water outlet 214. When the main pump water outlet 214 faces the interior of the target region 40 and is parallel to the horizontal direction, the third driving force applied to the moving apparatus is perpendicular to the target side wall 402, so that the moving apparatus can be tightly attached to the target side wall 402.

In some embodiments, when the moving apparatus needs to move on the target side wall 402, the main pump water outlet 214 may face the interior of the target region 40. When the main pump water outlet 214 tilts downward in the vertical direction, the third driving force applied to the moving apparatus has a horizontal component force facing the target side wall 402, so that the moving apparatus can be tightly attached to the target side wall 402. In addition, the third driving force further has an upward component force in the vertical direction, so that the moving apparatus can move upward along the target side wall 402. When the moving apparatus is located on the target bottom wall 401, the third driving force obtained by discharging liquid through the main pump water outlet 214 by using the main water pump 210 further has a component force in the horizontal direction, so that the moving apparatus can move on the target bottom wall 401.

In some embodiments, the main pump water inlet 213 may be disposed at the bottom of the moving apparatus. When the moving apparatus needs to move on the target side wall 402, the main water pump 210 may suck the liquid through the main pump water inlet 213 to obtain a fourth driving force to drive the moving apparatus to be tightly attached to the target side wall 402. The fourth driving force may be a suction force generated by sucking the liquid in the main water pump 210 through the main pump water inlet 213. The suction force may drive the moving apparatus to be tightly attached to the target side wall 402.

In some embodiments, when the moving apparatus needs to move on the target side wall 402, the main water pump 210 of the moving apparatus may drive the moving apparatus to be tightly attached to the target side wall 402. At least one of the track 111, the second propeller 132, or the main water pump 210 of the moving apparatus may provide an upward driving force in the vertical direction to drive the moving apparatus to move upward on the target side wall 402. At least one of the track 111 or the second propeller 132 of the moving apparatus may provide a downward driving force in the vertical direction to drive the moving apparatus to move downward on the target side wall 402. The main water pump 210 is disposed, so that the moving apparatus can be tightly attached to the target side wall 402 to limit a position of the moving apparatus. In this way, the moving apparatus can conveniently move on the target side wall 402, and the moving apparatus can be switched from the position under the water surface 30 to the position on the water surface 30.

In some embodiments, the moving apparatus includes the main pump water inlet 213 and the main pump water outlet 214. The main pump water inlet 213 and the main pump water outlet 214 are rotatably disposed on the moving apparatus, so that liquid at each of the main pump water inlet 213 and the main pump water outlet 214 rotatably flows to change a flow direction of the liquid in real time. In this way, the moving apparatus can obtain propulsion forces in various directions. It should be noted that the above description of the moving apparatus and various components thereof is merely for ease of description and does not limit the present disclosure to the scope of the cited embodiments. It may be understood that a person skilled in the art, with understanding of the principle of the apparatus, may make any combination of various components or form a sub-component to be connected to other components without departing from the principle.

The present disclosure provides a cleaning device. The cleaning device 10 includes a cleaning device body 101. The cleaning device body includes a drive mechanism, a filtering mechanism, a liquid inlet portion 103, a liquid outlet portion 104, and a moving apparatus. The drive mechanism is disposed on the cleaning device body 101. The drive mechanism is configured to form a suction force to guide a flow direction of liquid. The filtering mechanism is disposed on the cleaning device body 101 and configured to collect stains and floating objects in a target region 40 and filter liquid. The liquid inlet portion 103 is configured to allow the liquid to enter the cleaning device body 101. The liquid inlet portion 103 includes at least a first water inlet 1031. The first water inlet 1031 is disposed on the cleaning device body 101. In other words, the liquid enters the cleaning device body 101 through the first water inlet 1031. The liquid outlet portion 104 is configured to allow the liquid in the cleaning device body 101 to be discharged. The liquid outlet portion 104 includes at least a first water outlet. The first water outlet is disposed on the cleaning device body 101. In other words, the liquid is discharged from the cleaning device body 101 through the first water outlet. The filtering mechanism includes at least a first inlet and an outlet. The first inlet is in fluid communication with the first water inlet 1031. The outlet is in fluid communication with the first water outlet. The first water inlet 1031, the filtering mechanism, the drive mechanism, and the first water outlet communicate in sequence to form a first water flow path. Under guidance of the drive mechanism, the liquid enters the cleaning device body 101 through the first water inlet 1031, flows toward the first inlet, the filtering mechanism, the outlet, and the drive mechanism, and then is discharged through the first water outlet. In an actual process, the liquid may flow reversely. In other words, the liquid sequentially flows toward the first water outlet, the drive mechanism, the filtering mechanism, and the first water inlet 1031. This is not limited herein.

The moving apparatus is configured to allow the cleaning device 10 to be switched between a position on a water surface 30 and a position under the water surface 30. The moving apparatus may move in a vertical direction of the target region 40, so that the cleaning device 10 is switched between the position on the water surface 30 and the position under the water surface 30. When the cleaning device 10 is located under the water surface 30, the cleaning device 10 is fully immersed under the water surface 30. When the cleaning device 10 is located on the water surface 30, at least a part of the cleaning device 10 is located on the water surface 30. Therefore, with coordination of the first water inlet 1031 disposed on the cleaning device body 101 and the mode switching member 510, the cleaning device 10 can be regulated to perform at least two operating conditions: underwater cleaning and water surface cleaning, thereby meeting various use requirements. It should be noted that the moving apparatus of the cleaning device 10 in the present disclosure is the moving apparatus described in the above embodiment. Details are not described herein again.

In some embodiments, the liquid inlet portion 103 includes the first water inlet 1031. The first water inlet 1031 is located at a lower front portion of the cleaning device body 101. The first water inlet 1031 is used for both underwater cleaning and water surface cleaning. When the cleaning device 10 performs underwater cleaning, the first water inlet 1031 is located under the water surface 30, so that garbage under the water surface 30 can be sucked in. When the cleaning device 10 performs water surface cleaning, the first water inlet 1031 is at least partially exposed above the water surface 30, so that garbage floating on the water surface 30 can be sucked in. In other words, the cleaning device body 101 can implement underwater cleaning and water surface cleaning through the first water inlet 1031 and by regulating a posture of the cleaning device 10 in the target region 40, so that cleaning efficiency is improved. The liquid flows sequentially through the first water inlet 1031, the first inlet, the filtering mechanism, the outlet, the drive mechanism, and the liquid outlet portion. In the above embodiment, when the cleaning device 10 performs underwater cleaning, the posture of the cleaning device 10 is in a normal state. When the cleaning device 10 performs water surface cleaning, a front portion of the cleaning device 10 is lifted upward to be exposed at the water surface 30, so that the first water inlet 1031 is at least partially exposed above the water surface 30.

In some other embodiments, the liquid inlet portion 103 includes a first water inlet 1031. The first water inlet 1031 is located at the bottom of the cleaning device body 101. The first water inlet 1031 is used for both underwater cleaning and water surface cleaning. When the cleaning device 10 performs underwater cleaning, the first water inlet 1031 is located under the water surface 30 and faces a to-be-cleaned surface. When the cleaning device 10 performs water surface cleaning, the first water inlet 1031 is located under the water surface 30, is close to the water surface 30, and faces the water surface 30. In other words, the cleaning device body 101 can implement underwater cleaning and water surface cleaning through the first water inlet 1031 and by regulating the posture of the cleaning device 10 in the target region 40, so that cleaning efficiency is improved. The liquid flows sequentially through the first water inlet 1031, the first inlet, the filtering mechanism, the outlet, the drive mechanism, and the liquid outlet portion. In the above embodiment, when the cleaning device 10 performs underwater cleaning, the posture of the cleaning device 10 is in the normal state. When the cleaning device 10 performs water surface cleaning, the cleaning device 10 may flip, that is, the bottom of the cleaning device 10 faces upward. When the bottom of the cleaning device 10 faces upward, the filtering mechanism may be in a closed state, so that a risk of leaking garbage from the filtering mechanism is reduced.

In some embodiments, the liquid inlet portion 103 includes a first water inlet 1031 and a second water inlet 1032. The first water inlet 1031 is disposed at the bottom of the cleaning device body 101. When the cleaning device 10 cleans the bottom or the wall of the pool, the first water inlet 1031 is close to the bottom or the wall of the pool, so that liquid is sucked in the cleaning device 10. The liquid inlet portion 103 includes the second water inlet 1032. In other words, the liquid enters the cleaning device body 101 through the second water inlet 1032. The second water inlet 1032 is disposed at a side surface of the front portion of the cleaning device body 101. When the cleaning device 10 performs water surface cleaning, the second water inlet 1032 is at least partially exposed above the water surface 30, so that garbage floating on the water surface 30 can be sucked in. The cleaning device 10 can implement water surface cleaning through the second water inlet 1032. In addition, the first water inlet 1031 and the second water inlet 1032 may operate cooperatively to improve the cleaning efficiency of the cleaning device 10.

In some embodiments, the liquid inlet portion 103 includes a first water inlet 1031 and a second water inlet 1032. The first water inlet 1031 is disposed at the bottom of the cleaning device body 101. The second water inlet 1032 is disposed at the top or a side portion of the cleaning device body 101. The first water inlet 1031 is used for cleaning the bottom or the wall of the pool. The second water inlet 1032 is used for performing water surface cleaning. When the second water inlet 1032 is disposed at the top of the cleaning device body 101, the cleaning device 10 floats up to be close to the water surface 30, and a posture of the cleaning device 10 is the same as that existing when the cleaning device 10 moves on the bottom of the pool. The second water inlet 1032 is opened and is located close to and under the water surface under an action of the drive mechanism, such as a main water pump, so that the garbage on the water surface enters the cleaning device 10 through the second water inlet 1032. When the second water inlet 1032 is disposed on the side portion of the cleaning device body 101, in a process in which the cleaning device 10 floats up to be close to the water surface 30, the posture of the cleaning device 10 may be regulated until the second water inlet 1032 faces the water surface 30 and is located under and close to the water surface 30.

In some other embodiments, the liquid inlet portion 103 includes a first water inlet 1031 and a second water inlet 1032. In addition to being disposed at the lower front portion of the cleaning device body 101, the first water inlet 1031 may alternatively be disposed at a lower rear portion of the cleaning device body 101 or a side surface of the cleaning device body 101. It should be noted that a position of the liquid inlet portion 103 is related to a position of the filtering mechanism. When the filtering mechanism is disposed at the front portion of the cleaning device 10, the liquid inlet portion 103 is disposed at the front portion of the cleaning device 10. When the filtering mechanism is disposed at the rear portion of the cleaning device 10, the liquid inlet portion 103 is disposed at the rear portion of the cleaning device 10.

In some embodiments, the filtering mechanism includes a filtering assembly 710. The filtering assembly has a filtering function. The filtering assembly 710 includes the first inlet. The first water inlet 1031 and the second water inlet 1032 are both in fluid communication with the first inlet of the filtering assembly 710. At least a part of liquid is driven by the drive mechanism to sequentially flow through the first water inlet 1031, the first inlet, the filtering assembly 710, the drive mechanism, and the liquid outlet portion 104. At least a part of the liquid sequentially flows through the second water inlet 1032, the first inlet, the filtering assembly 710, the drive mechanism, and the liquid outlet portion 104. The first water inlet 1031 and the second water inlet 1032 both communicate with the first inlet to improve the cleaning efficiency of the cleaning device 10. The second water inlet 1032 and the first inlet may communicate with each other through a duct or the like.

The filtering mechanism may include one, two, three, or more filtering assemblies 710. A quantity of filtering assemblies 710 may be determined based on an actual requirement. When there are two, three, or more filtering assemblies 710, adjacent filtering assemblies 710 may be connected to each other in series or in parallel, which may be determined based on various use requirements of the cleaning device 10. This is not limited herein.

In some embodiments, the filtering mechanism includes one filtering assembly 710. The filtering assembly 710 includes a first inlet and a second inlet. The first water inlet 1031 is in fluid communication with the first inlet of the filtering assembly 710. The second inlet and the first inlet are located on different surfaces of the filtering mechanism. In other words, at least a part of the liquid sequentially flows through the first water inlet 1031, the first inlet, the filtering assembly 710, the drive mechanism, and the liquid outlet portion 104. The second water inlet 1032 communicates with the second inlet of the filtering assembly 710. In other words, at least a part of the liquid sequentially flows through the second water inlet 1032, the second inlet, the filtering assembly 710, the drive mechanism, and the liquid outlet portion 104. The first water inlet 1031 is in fluid communication with the first inlet, and the second water inlet 1032 is in fluid communication with the second inlet, so that liquid flow paths are increased. In this way, cleaning requirements of at least two operating conditions: underwater cleaning and water surface cleaning are met, thereby meeting various use requirements.

In some embodiments, the filtering mechanism includes two filtering assemblies 710. The two filtering assemblies 710 are a first filtering assembly 770 and a second filtering assembly 780. The first filtering assembly 770 is provided with a first inlet. The second filtering assembly 780 is provided with a second inlet. The first water inlet 1031 is in fluid communication with the first inlet of the first filtering assembly 770. In other words, at least a part of the liquid sequentially flows through the first water inlet 1031, the first inlet, the first filtering assembly 770, the drive mechanism, and the liquid outlet portion 104. The second water inlet 1032 is in fluid communication with the second inlet of the second filtering assembly 780. In other words, at least a part of the liquid sequentially flows through the second water inlet 1032, the second inlet, the second filtering assembly 780, the drive mechanism, and the liquid outlet portion 104. Different liquid flow paths are implemented by using the two filtering assemblies 710. This improves the cleaning efficiency of the cleaning device 10.

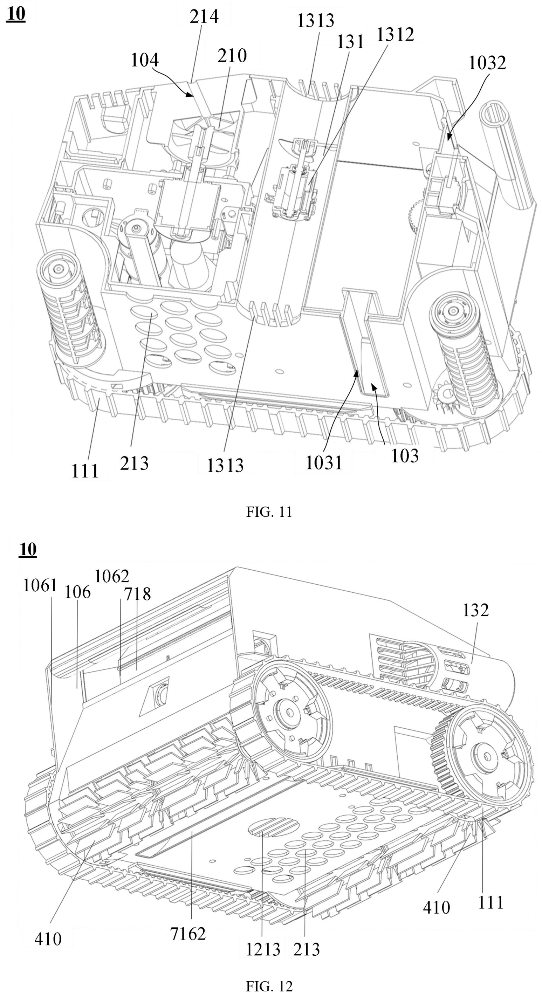

FIG. 12 is a schematic structural view of a cleaning device according to a third embodiment of the present disclosure.

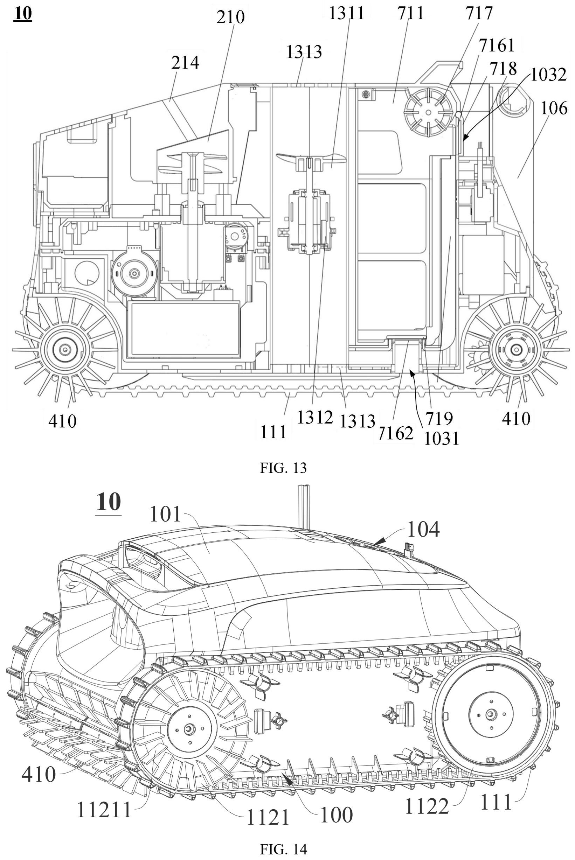

The cleaning device 10 is configured to clean the target region 40. In some embodiments, the cleaning device 10 includes a filtering mechanism and a control member. The filtering mechanism includes a filtering assembly 710. The filtering assembly 710 includes a filtering box 711. The filtering box 711 may be configured to perform water surface cleaning and underwater cleaning on the target region 40. The control member of the cleaning device 10 controls the moving apparatus to be switched between a position on the water surface and a position under the water surface of the swimming pool, to implement water surface cleaning or underwater cleaning. As shown in FIG. 12 and FIG. 13, the filtering box 711 may include a filtering box water inlet portion 716. The filtering box water inlet portion 716 includes one or more filtering box openings. The filtering box opening may be an inlet configured to allow garbage or other debris in the target region 40 to enter the cleaning device 10.

In some embodiments, the liquid inlet portion 103 includes a first water inlet 1031. The filtering box water inlet portion 716 may include a filtering box opening for underwater cleaning 7162. The filtering box opening for underwater cleaning 7162 may be an inlet configured to allow garbage or debris in liquid in the target region 40 to enter the filtering box 711. The filtering box opening for underwater cleaning 7162 may be disposed under a position at which the cleaning device 10 floats on the water surface 30. For example, the filtering box opening for underwater cleaning 7162 may be disposed at the bottom of the cleaning device 10. For another example, the filtering box opening for underwater cleaning 7162 may be disposed on a side of the cleaning device 10 under the position at which the cleaning device 10 floats on the water surface. A position of the first water inlet 1031 corresponds to a position of the filtering box opening for underwater cleaning 7162. In other words, the first water inlet 1031 may be disposed under the position at which the cleaning device 10 floats on the water surface 30.

In some embodiments, the liquid inlet portion 103 includes a second water inlet 1032. The filtering box water inlet portion 716 may include a filtering box opening for water surface cleaning 7161. The filtering box opening for water surface cleaning 7161 communicates with the second water inlet 1032. The filtering box opening for water surface cleaning 7161 may be an inlet configured to allow garbage or debris on the water surface 30 of the target region 40 to enter the filtering box 711. The filtering box opening for water surface cleaning 7161 may be disposed on a side (for example, a front side), the bottom, or the top of the cleaning device 10. The filtering box opening for water surface cleaning 7161 may be aligned with the position at which the cleaning device 10 floats on the water surface. In this way, garbage or other debris on the water surface of the swimming pool can enter the filtering box 711 with the liquid through the filtering box opening for water surface cleaning 7161. For example, when the filtering box opening for water surface cleaning 7161 is located on the side surface or the bottom of the cleaning device 10, the position at which the cleaning device 10 floats on the water surface may be aligned with a midline position or a 1/3 position on the filtering box opening for water surface cleaning 7161. In this case, the cleaning device 10 is in a normal posture. A position of the second water inlet 1032 corresponds to a position of the filtering box opening for water surface cleaning 7161. When the filtering box opening for water surface cleaning 7161 is located at the top, the bottom, or the side surface of the cleaning device 10, the position at which the cleaning device 10 floats on the water surface may be aligned with a position on the top, the bottom, or the side surface. In this case, the cleaning device 10 is in an inverted posture.

In some embodiments, the filtering box 711 may further include a filtering box roller brush assembly 717. The filtering box 711 may include one or more filtering box roller brush assemblies 717. The filtering box roller brush assembly 717 may be configured to draw garbage or other debris on the water surface into the filtering box 711 during water surface cleaning, to improve water surface cleaning efficiency. The filtering box roller brush assembly 717 may be disposed in the filtering box opening for water surface cleaning 7161. As shown in FIG. 11, the filtering box roller brush assembly 717 may be disposed inside the filtering box opening for water surface cleaning 7161.

In some embodiments, the filtering box roller brush assembly 717 may alternatively be disposed outside the filtering box opening for water surface cleaning 7161 or on the filtering box opening for water surface cleaning 7161. The filtering box opening for water surface cleaning 7161 and the filtering box opening for underwater cleaning 7162 are disposed, so that the cleaning device 10 can perform water surface cleaning and underwater cleaning. This expands usage scenarios of the cleaning device 10 and improves user experience.

In some embodiments, the filtering box 711 may further include an regulation part for water surface cleaning (not shown in the figure) and an regulation part for underwater cleaning (not shown in the figure). The regulation part for water surface cleaning is configured to regulate an open state and a closed state of the filtering box opening for water surface cleaning 7161. The regulation part for underwater cleaning is configured to regulate an open state and a closed state of the filtering box opening for underwater cleaning 7162. The control member may regulate the regulation part for water surface cleaning and/or the regulation part for underwater cleaning to correspondingly control the filtering box opening for water surface cleaning 7161 and/or the filtering box opening for underwater cleaning 7162 to be opened or closed.

When the cleaning device 10 performs underwater cleaning, both the regulation part for water surface cleaning and the regulation part for underwater cleaning are in the open state, that is, the regulation part for water surface cleaning is opened, enabling the filtering box opening for water surface cleaning 7161 to be opened, and the regulation part for underwater cleaning is opened, enabling the filtering box opening for underwater cleaning 7162 to be opened. Both the filtering box opening for water surface cleaning 7161 and the filtering box opening for underwater cleaning 7162 are opened, so that more liquid is sucked in. This improves the cleaning efficiency. Alternatively, the regulation part for water surface cleaning is in the closed state, and the regulation part for underwater cleaning is in the open state, that is, the regulation part for water surface cleaning is closed, enabling the filtering box opening for water surface cleaning 7161 to be closed, and the regulation part for underwater cleaning is opened, enabling the filtering box opening for underwater cleaning 7162 to be opened. The filtering box opening for water surface cleaning 7161 is closed, and the filtering box opening for underwater cleaning 7162 is opened, so that a suction power of the filtering box opening for underwater cleaning 7162 of the cleaning device 10 can be increased to prevent the filtering box opening for water surface cleaning 7161 from diverting liquid. This improves underwater cleaning efficiency of the cleaning device 10.

When the cleaning device 10 performs water surface cleaning, both the regulation part for water surface cleaning and the regulation part for underwater cleaning are in the open state, that is, the regulation part for water surface cleaning is opened, enabling the filtering box opening for water surface cleaning 7161 to be opened, and the regulation part for underwater cleaning is opened, enabling the filtering box opening for underwater cleaning 7162 to be opened. Both the filtering box opening for water surface cleaning 7161 and the filtering box opening for underwater cleaning 7162 are opened, so that stability of the posture of the cleaning device 10 at the water surface is facilitated. Alternatively, the regulation part for water surface cleaning is in the open state, and the regulation part for underwater cleaning is in the closed state, that is, the regulation part for water surface cleaning is opened, enabling the filtering box opening for water surface cleaning 7161 to be opened, and the regulation part for underwater cleaning is closed, enabling the filtering box opening for underwater cleaning 7162 to be closed. The filtering box opening for water surface cleaning 7161 is opened, and the filtering box opening for underwater cleaning 7162 is closed, so that a suction power of the filtering box opening for water surface cleaning 7161 of the cleaning device 10 can be increased to prevent the filtering box opening for underwater cleaning 7162 from diverting liquid. This improves underwater cleaning efficiency of the cleaning device 10. No matter whether when the cleaning device 10 is in the normal posture or when the cleaning device 10 is the inverted posture, the open state and the closed state of the filtering box opening for water surface cleaning 7161 are regulated by using the regulation part for water surface cleaning, and/or the open state and the closed state of the filtering box opening for underwater cleaning 7162 are regulated by using the regulation part for underwater cleaning.

In some embodiments, the filtering box 711 may further include a filtering box opening cover plate for water surface cleaning 718 and a filtering box opening cover plate for underwater cleaning 719. The regulation part for water surface cleaning may include the filtering box opening cover plate for water surface cleaning 718. The regulation part for underwater cleaning may include the filtering box opening cover plate for underwater cleaning 719. The filtering box opening cover plate for water surface cleaning 718 is configured to regulate the open state and the closed state of the filtering box opening for water surface cleaning 7161. When the filtering box opening for water surface cleaning 7161 is in the open state, liquid at the water surface of the swimming pool can enter the filtering box 711 through the filtering box opening for water surface cleaning 7161. When the filtering box opening for water surface cleaning 7161 is in the closed state, the liquid at the water surface of the swimming pool cannot enter the filtering box 711 through the filtering box opening for water surface cleaning 7161. The filtering box opening cover plate for water surface cleaning 718 is disposed at the filtering box opening for water surface cleaning 7161. As shown in FIG. 13, the filtering box opening cover plate for water surface cleaning 718 may be disposed in the filtering box opening for water surface cleaning 7161. The filtering box opening cover plate for water surface cleaning 718 may alternatively be disposed inside or outside the filtering box opening for water surface cleaning 7161.

Similar to the filtering box opening cover plate for water surface cleaning 718, the filtering box opening cover plate for underwater cleaning 719 is configured to regulate the open state and the closed state of the filtering box opening for underwater cleaning 7162. The filtering box opening cover plate for underwater cleaning 719 is disposed at the filtering box opening cover plate for underwater cleaning 7162. The filtering box opening cover plate for underwater cleaning 719 is disposed in the filtering box opening for underwater cleaning 7162 or inside or outside the filtering box opening for underwater cleaning 7162.

The filtering box opening cover plate for water surface cleaning 718 and the filtering box opening cover plate for underwater cleaning 719 may be movable parts. The control member may regulate the filtering box opening cover plate for water surface cleaning 718 and/or the filtering box opening cover plate for underwater cleaning 719 to open or close a corresponding filtering box opening. For example, the filtering box opening cover plate for water surface cleaning 718 may be a rotatable part, and the control member can control the filtering box opening cover plate for water surface cleaning 718 to rotate to switch the filtering box opening for water surface cleaning 7161 from the closed state to the open state.

In some embodiments, when the cleaning device 10 needs to perform underwater cleaning, the control member can enable, by using the filtering box opening cover plate for water surface cleaning 718, the filtering box opening for water surface cleaning 7161 to remain in the closed state, and enable, by using the filtering box opening cover plate for underwater cleaning 719, the filtering box opening for underwater cleaning 7162 to remain in the open state, to prevent the filtering box opening for water surface cleaning 7161 from diverting liquid and ensure the suction power of the filtering box opening for underwater cleaning 7162. This can improve the underwater cleaning efficiency of the cleaning device 10. In other embodiments, the filtering box opening for water surface cleaning 7161 may also be in the open state.

Similarly, when the cleaning device 10 needs to perform water surface cleaning, the control member may enable, by using the filtering box opening cover plate for underwater cleaning 719, the filtering box opening for underwater cleaning 7162 to remain in the closed state, and enable, by using the filtering box opening cover plate for water surface cleaning 718, the filtering box opening for water surface cleaning 7161 to remain in the open state, to prevent the filtering box opening for underwater cleaning 7162 from diverting liquid and ensure the suction power of the filtering box opening for water surface cleaning 7161. This can improve the water surface cleaning efficiency of the cleaning device 10. In other embodiments, the filtering box opening for underwater cleaning 7162 may also be in the open state.

In some embodiments, the regulation part for water surface cleaning may alternatively be an regulation valve for water surface cleaning. The regulation part for underwater cleaning may alternatively be an regulation valve for underwater cleaning. Opening of the regulation valve for water surface cleaning and the regulation valve for underwater cleaning may be determined based on an operating parameter of the main water pump 210, such as operating power of the main water pump 210. The regulation valve for water surface cleaning and the regulation valve for underwater cleaning can be opened only after a certain pressure threshold is met. When the operating power of the main water pump 210 is greater than a pressure threshold of the regulation valve for water surface cleaning, the regulation valve for water surface cleaning is opened, enabling the filtering box opening for water surface cleaning 7161 to be opened. When the operating power of the main water pump 210 is less than the pressure threshold of the regulation valve for water surface cleaning, the regulation valve for water surface cleaning is closed, enabling the filtering box opening for water surface cleaning 7161 to be closed. When the operating power of the main water pump 210 is greater than a pressure threshold of the regulation valve for underwater cleaning, the regulation valve for underwater cleaning is opened, enabling the filtering box opening for underwater cleaning 7162 to be opened. When the operating power of the main water pump 210 is less than the pressure threshold of the regulation valve for underwater cleaning, the regulation valve for underwater cleaning is closed, enabling the filtering box opening for underwater cleaning 7162 to be closed. The regulation valve for water surface cleaning and the regulation valve for underwater cleaning may be, but are not limited to, a duckbill valve. This is not limited herein. In some embodiments, the filtering box 711 may further include other structures. For example, the filtering box 711 may further include a filtering mesh. The filtering mesh may be configured to filter liquid entering the filtering box 711.

The control member may be configured to control the cleaning device 10 to perform water surface cleaning or underwater cleaning for the swimming pool. In some embodiments, the control member may obtain a target task of cleaning a target swimming pool, where the target task includes water surface cleaning and underwater cleaning; determine an regulation parameter of a moving apparatus based on the target task and a current position of the cleaning device 10; and control, based on the regulation parameter, the moving apparatus to drive the cleaning device 10 to move to a target position to perform the target task. For details about the above embodiments, refer to FIG. 19 and related descriptions thereof.

The cleaning device 10 provided with the moving apparatus may comprehensively clean the bottom of the swimming pool, perform underwater cleaning, and perform water surface cleaning to ensure comprehensive cleaning of the swimming pool.

In some embodiments, the cleaning device 10 may further include a garbage guiding member 106. The garbage guiding member 106 may drive garbage at the water surface 30 of the swimming pool to enter the filtering box opening for water surface cleaning 7161. As shown in FIG. 12 and FIG. 13, the garbage guiding member 106 may be disposed outside the filtering box opening for water surface cleaning 7161, and the interior of the garbage guiding member 106 is hollow. A first port 1061 of the garbage guiding member 106 is away from the filtering box opening for water surface cleaning 7161, and a second port 1062 of the garbage guiding member 106 is connected to the filtering box opening for water surface cleaning 7161. A size of the first port 1061 is greater than a size of the filtering box opening for water surface cleaning 7161, and a size of the second port 1062 is not less than the size of the filtering box opening for water surface cleaning 7161. The garbage guiding member 106 may include, but is not limited to, a truncated cone or a trapezoid structure with the interior thereof being hollow.

In some embodiments, the size of the first port 1061 may be in proportion to the size of the filtering box opening for water surface cleaning 7161. For example, a ratio of the size of the first port 1061 to the size of the filtering box opening for water surface cleaning 7161 may not be greater than 10:1, to prevent excessive garbage or debris from entering the filtering box opening for water surface cleaning 7161 at the same time, so that the filtering box opening for water surface cleaning 7161 is prevented from being clogged. The garbage guiding member 106 is disposed, so that garbage on a wide water surface can be gathered together and enter the filtering box opening for water surface cleaning 7161. This avoids the following case: The water surface cleaning efficiency of the cleaning device 10 is reduced due to the excessively small filtering box opening for water surface cleaning 7161.

As shown in FIG. 12 and FIG. 13, the cleaning device 10 may further include a roller brush for underwater cleaning 410. The roller brush for underwater cleaning 410 may be configured to clean the target bottom wall 401 and the target side wall 402 of the swimming pool. The cleaning device 10 may include one or more roller brushes for underwater cleaning 410. The roller brush for underwater cleaning 410 may be disposed at the bottom of and/or on a side of the cleaning device 10. As shown in FIG. 12, one roller brush for underwater cleaning 410 is disposed on each of a front portion and a rear portion of the bottom of the cleaning device 10. When the cleaning device 10 moves on the bottom of the swimming pool, the roller brush for underwater cleaning 410 can clean the bottom of the swimming pool (such as cleaning debris or algae). When the cleaning device 10 moves on the wall of the swimming pool, the roller brush for underwater cleaning 410 may further clean the wall of the swimming pool.

When the liquid inlet portion 103 includes a first water inlet 1031, the roller brush for underwater cleaning 410 at the bottom of the cleaning device 10 may be used for both underwater cleaning and water surface cleaning, that is, the roller brush for underwater cleaning 410 is shared. When the liquid inlet portion 103 includes a first water inlet 1031 and a second water inlet 1032, the first water inlet 1031 is disposed at the bottom of the cleaning device 10. The roller brush for underwater cleaning is used for underwater cleaning. The second water inlet 1032 is disposed at a front side of the cleaning device 10. A roller brush for water surface cleaning is disposed at the second water inlet 1032. The roller brush for water surface cleaning is used for water surface cleaning. When a roller brush of the filtering box 711 is disposed outside the second water inlet 1032, the roller brush of the filtering box 711 may be the roller brush for water surface cleaning. Certainly, both the roller brush of the filtering box 711 and the roller brush for water surface cleaning may exist. This is not limited herein.

In some embodiments, the cleaning device 10 includes a drive mechanism. The drive mechanism includes a main water pump 210. The cleaning device 10 includes a liquid outlet portion 104. The liquid sequentially flows through the liquid inlet portion 103, the filtering box water inlet portion 716, the filtering assembly 710, the main water pump 210, and the liquid outlet portion 104. The liquid inlet portion 103, the filtering box water inlet portion 716, the filtering assembly 710, the main water pump 210, and the liquid outlet portion 104 form a flow path. The main water pump 210 provides a certain suction force, so that garbage in water or on the water surface can conveniently enter the filtering assembly 710. The flow path is related to a quantity of water inlets of the liquid inlet portion 103, a quantity of filtering box openings of the filtering box water inlet portion 716, a quantity of filtering assemblies 710, and the like. This is not limited herein.

The first regulation assembly, the second regulation assembly, the mode switching member 510, the movement propulsion system 100, the drive mechanism, and the filtering system of the moving apparatus cooperate with each other. Therefore, the mode switching member 510, the first buoyancy assembly, the gravity assembly, the second buoyancy assembly, the first functional sub-assembly, the second functional sub-assembly, the lifting propulsion assembly, and the umbrella assembly of the moving apparatus, the first propeller 131 of the movement propulsion system 100, and the main pump water outlet 214 and the main pump water inlet 213 of the drive mechanism all can provide the first driving force in the vertical direction, so that the cleaning device 10 can float up and submerge. The track 111, the drive paddle 11211, and the second propeller 132 of the movement propulsion system 100, and the main pump water outlet 214 and the main pump water inlet 213 of the drive mechanism all can provide the second driving force in the horizontal direction, so that the cleaning device 10 can move forward and backward in the horizontal direction. The flow direction of the liquid is changed by the first propulsion part and the second propulsion part to provide driving forces in directions other than the vertical direction and the horizontal direction, so that the cleaning device 10 can move in various directions in water. The mode switching member 510, the lifting propulsion assembly, and the umbrella assembly of the moving apparatus, and the main water pump 210 of the drive mechanism provide propulsion forces, so that the cleaning device 10 can suspend when forces applied to the cleaning device 10 are balanced. When the cleaning device 10 cannot suspend under an action of the propulsion forces alone, a volume of the buoyancy cavity 5111 may be changed to compensate for the first driving force for the cleaning device 10 to float up and submerge.

It should be noted that the above description of the cleaning device 10 and various members thereof is merely for ease of description and does not limit the present disclosure to the scope of the cited embodiments. It may be understood that a person skilled in the art, with understanding of the principle of the apparatus, may make any combination of various components or form a sub-component to be connected to other components without departing from the principle.

FIG. 19 is a schematic flow chart of a liquid cleaning control method according to the present disclosure. The method 1000 may be applied to the cleaning device 10 and executed by the control member. As shown in FIG. 19, the method 1000 may include the following steps.

Step 1010: Obtain a target task of cleaning a target swimming pool.

The target swimming pool may be a to-be-cleaned swimming pool. The target task may be a task of cleaning the target swimming pool. The target task may include water surface cleaning and/or underwater cleaning. The water surface cleaning may mean cleaning a water surface of the target swimming pool. The underwater cleaning may mean cleaning an underwater part of the target swimming pool (such as water in the swimming pool and a wall of the swimming pool). In some embodiments, the target task may further include cleaning a specific to-be-cleaned part. For example, underwater cleaning may further include, but is not limited to, cleaning the water, cleaning the bottom of the pool, cleaning each wall of the pool, and the like.

The control member may obtain the target task in various manners. For example, the control member may obtain the target task input by a user. For another example, the control member may be configured to perform the target task periodically, such as performing water surface cleaning once every three days and performing underwater cleaning once every two days. For another example, the cleaning device 10 may include a detection member. The detection member may detect water quality of the target swimming pool to obtain water quality data of the target swimming pool. The control member may obtain the water quality data and determine the target task based on the water quality data. The water quality data may be data reflecting water quality of the target swimming pool. The water quality data includes, but is not limited to, a picture of the water surface of the target swimming pool, a picture of the water in the target swimming pool, and a picture of each pool wall. The control member may input the water quality data into a task determining model, and an output of the task determining model may include the target task. The task determining model may analyze the water quality data of the target swimming pool to determine cleanliness (such as clarity, algae distribution, and debris) of various regions (such as the water surface, water in the swimming pool, and each pool wall) to determine a corresponding target task. The task determining model may be a convolutional neural network model, a graph neural network model, or any machine learning model that implements the above functions. The task determining model may be obtained by performing training based on a plurality of groups of training samples with labels. The training samples may include sample water quality data of a sample swimming pool, and the labels may include a sample task. The sample task may be obtained by manually labeling the sample water quality data.

Step 1020: Determine an regulation parameter of a moving apparatus based on the target task and a current position of the cleaning device.

The control member may obtain the current position of the cleaning device 10. For more details about obtaining the current position of the cleaning device 10, refer to the above description of the first sensor.

The regulation parameter may include information of a route from the current position to a position, in the target swimming pool, at which the target task needs to be performed and route information required to complete the target task.

The control member may determine, based on the target task, a starting position, in the target swimming pool, at which the target task needs to be performed; determine, based on the starting position and the current position, the information of the route of the cleaning device 10 from the current position to the position, in the target swimming pool, at which the target task needs to be performed; and determine, based on the target task for the target swimming pool, the route information required to complete the target task, to determine the regulation parameter of the moving apparatus.

Step 1030: Control, based on the regulation parameter, the moving apparatus to drive the cleaning device to move and perform cleaning to complete the target task.

The control member may control, based on the information of the route from the current position to the position, in the target swimming pool, at which the target task needs to be performed in the regulation parameter, the moving apparatus to drive the cleaning device 10 to move from the current position to the starting position at which the target task needs to be performed, and turn on, based on the route information required to complete the target task in the regulation parameter, a filtering box 711 and a roller brush for underwater cleaning 410 of the cleaning device 10 to perform cleaning to complete the target task. After completing the target task, the cleaning device 10 may stay at an end position, return to the starting position before moving, or move to a preset default position.

According to the liquid cleaning control method, the cleaning device 10 can be controlled to clean all parts of the swimming pool. This improves swimming pool cleaning efficiency and ensures comprehensive cleaning of the swimming pool.

It should be noted that the foregoing description of the method 1000 is merely for description and does not limit the scope of the present disclosure. For a person of ordinary skill in the art, various modifications and changes can be made to the method 1000 under the guidance of the present disclosure. However, these amendments and changes shall fall within the scope of the present disclosure.

Some embodiments further provide a computer-readable storage medium. The storage medium may store computer instructions. When the computer instructions are executed by a processor, the liquid cleaning control method in this specification is implemented.

The above description describes only implementations of the present disclosure and is not intended to limit the scope of the present disclosure. Any equivalent structure or equivalent process transformation performed based on the contents of this specification and the accompanying drawings of the present disclosure or applied directly or indirectly in other related technical fields shall fall within the protection scope of the present disclosure.

## Claims

1. A moving apparatus used in liquid, comprising:
a regulation assembly configured to regulate a force in a first direction applied to the moving apparatus or a force in a second direction applied to the moving apparatus, wherein
the moving apparatus is switched between a first motion state and a third motion state under an action of the regulation assembly, wherein the moving apparatus is capable of performing underwater cleaning in the first motion state and performing water surface cleaning in the third motion state; and
the force under the first direction helps the moving apparatus to be switched from the first motion state to the third motion state, and the force under the second direction helps the moving apparatus to be switched from the third motion state to the first motion state.

2. The moving apparatus according to claim 1, wherein the regulation assembly comprises a first regulation assembly configured to regulate the force in the first direction applied to the moving apparatus, wherein the first regulation assembly comprises at least one selected from a first propulsion part, a biomimetic fin member, a lifting propulsion apparatus and an umbrella mechanism.

3. The moving apparatus according to claim 1 or 2, wherein the regulation assembly further comprises a second regulation assembly configured to regulate the force in the second direction applied to the moving apparatus, wherein the second regulation assembly comprises at least one selected from a first propulsion part and a biomimetic fin member.

4. The moving apparatus according to claim 1 to 3, wherein the first regulation assembly is identical to the second regulation assembly.

5. The moving apparatus according to claim 2 or 3, comprising at least one set of a first power water inlet portion and a first power water outlet portion, wherein the first power water inlet portion communicates with the first power water outlet portion through the first propulsion part.

6. The moving apparatus according to claim 5, wherein the at least one set of the first power water inlet portion and the first power water outlet portion is rotatably disposed on the moving apparatus.

7. The moving apparatus according to claim 2 or 3, wherein the first propulsion part comprises a first propeller, wherein the first propeller comprises:
a first impeller configured to drive liquid to move in a first preset direction, wherein when the liquid moves in the first preset direction, a first driving force in a first direction or in a second direction is applied to the moving apparatus; and
a first propeller motor configured to provide power for the first impeller.

8. The moving apparatus according to any one of claims 1 to 7, wherein the moving apparatus is detachably connected to a first buoyancy module and/or a gravity module, wherein the first buoyancy module and/or the gravity module are/is disposed on a docking assembly in a target region.

9. The moving apparatus according to any one of claims 1 to 7, wherein the moving apparatus is telescopically connected to a second buoyancy module, wherein the second buoyancy module floats on a water surface of a target region.

10. The moving apparatus according to any one of claims 1 to 7, comprising a first functional assembly and a second functional assembly, wherein the first functional assembly comprises different first functional sub-assemblies, and the second functional assembly comprises different second functional sub-assemblies, wherein a density of the first functional sub-module is less than a density of liquid in a target region, and a density of the second functional sub-module is greater than the density of the liquid in the target region, wherein when the moving apparatus needs to be switched from the first motion state to the third motion state, the second functional sub-module is separated, and the first functional sub-module is added, and when the moving apparatus needs to be switched from the third motion state to the first motion state, the first functional sub-module is separated, and the second functional sub-module is added.

11. The moving apparatus according to any one of claims 3 to 10, wherein the first regulation assembly is configured to regulate the force in the first direction applied to the moving apparatus, the second regulation assembly is configured to regulate the force in the second direction applied to the moving apparatus, a structure of the first regulation assembly is the same as that of the second regulation assembly, and the first regulation assembly comprises a mode switching member configured to regulate a magnitude of a buoyancy force applied to the moving apparatus in a vertical direction.

12. The moving apparatus according to claim 11, wherein the mode switching member comprises:
a buoyancy cavity configured to accommodate liquid and/or gas; and
a buoyancy regulation part configured to regulate a volume of the liquid or the gas in the buoyancy cavity.

13. The moving apparatus according to any one of claims 1 to 12, further comprising a second propeller configured to drive liquid to move in a second preset direction, wherein when the liquid moves in the second preset direction, a second driving force is applied to the moving apparatus in a horizontal direction, wherein a magnitude of the second driving force is positively correlated with a speed at which the liquid moves in the second preset direction.

14. The moving apparatus according to any one of claims 1 to 12, comprising at least one first wheel disposed at a bottom of the moving apparatus, wherein a drive paddle is disposed on an outer side surface of the first wheel, wherein when the moving apparatus moves on the water surface, the drive paddle is at least partially located under the water surface, and the first wheel rotates to apply a second driving force to the moving apparatus in a horizontal direction.

15. The moving apparatus according to any one of claims 1 to 12, further comprising a drive mechanism, wherein the drive mechanism comprises:
a main water pump configured to generate a suction force to allow the moving apparatus to suck in liquid through a water inlet and discharge liquid through a water outlet.

16. The moving apparatus according to claim 15, wherein the moving apparatus is configured to move in a target region containing the liquid, and the water outlet comprises a main pump water outlet, wherein
when the moving apparatus is located on a target side wall, the main pump water outlet faces the target region and is parallel to a horizontal direction or tilts downward in the vertical direction, and when the moving apparatus needs to move on the target side wall, the main water pump is further configured to:
allow the liquid to be discharged through the main pump water outlet, to obtain a third driving force to drive the moving apparatus to be tightly attached to the target side wall .

17. The moving apparatus according to claim 15 or 16, wherein the moving apparatus is configured to move in the target region containing the liquid, and the water inlet comprises a main pump water inlet disposed at a bottom of the moving apparatus, wherein when the moving apparatus needs to move on the target side wall, the main water pump is further configured to:
allow the liquid to be sucked in through the main water pump inlet, to obtain a fourth driving force to drive the moving apparatus to be tightly attached to the target side wall.

18. A cleaning device, comprising a cleaning device body, wherein the cleaning device body comprises:
a liquid inlet portion comprising at least a first water inlet;
a liquid outlet portion comprising at least a first water outlet;
a filtering mechanism comprising at least a first inlet and an outlet, wherein the first inlet is in fluid communication with the first water inlet, and the outlet is in fluid communication with the first water outlet;
a drive mechanism configured to generate a suction force to form a first water flow path with the liquid inlet portion, the filtering mechanism, and the liquid outlet portion; and
the moving apparatus according to any one of claims 1 to 17, wherein the cleaning device is switched between a first motion state and a third motion state, wherein the cleaning device is capable of performing underwater cleaning in the first motion state and performing water surface cleaning in the third motion state.

19. The cleaning device according to claim 18, wherein the first water inlet is located at a bottom of the cleaning device body, and the liquid inlet portion further comprises a second water inlet, wherein the second water inlet is disposed at a side surface or a top of the cleaning device body.

20. The cleaning device according to claim 18 or 19, wherein the filtering mechanism comprises a second inlet, wherein the second inlet is in fluid communication with the second water inlet, and the second inlet and the first inlet are located on different surfaces of the filtering mechanism.
